# EUROPÄISCHE PATENTSCHRIFT

(11) **EP 1 866 351 B1**
(45) Veröffentlichungstag und Bekanntmachung des Hinweises auf die Patenterteilung: **17.11.2010**
(21) Anmeldenummer: 06723990.5
(22) Anmeldetag: 04.04.2006
(51) Int. Cl.: C08F 220/10, C08F 222/10, C10M 145/10

(54) **SCHMIERÖLZUSAMMENSETZUNG ENTHALTEND POLYALKYL(METH)ACRYLAT-COPOLYMERE**
LUBRICATING OIL COMPOSITION COMPRISING POLYALKYL (METH)ACRYLATE COPOLYMERS
COMPOSITION D'HUILE LUBRIFIANTE COMPRENANT DES COPOLYMÈRES DE TYPE POLYALKYL(MÉTH)ACRYLATE

(30) Priorität: 06.04.2005 DE 102005015931
(43) Veröffentlichungstag der Anmeldung: 19.12.2007
(73) Patentinhaber: Evonik RohMax Additives GmbH, 64293 Darmstadt (DE)
(72) Erfinder: MÜLLER, Michael, 64625 Bensheim (DE); STÖHR, Torsten, 60326 Frankfurt (DE); EINSENBERG, Boris, 64646 Heppenheim (DE)
(86) Internationale Anmeldenummer: PCT/EP2006/003032
(87) Internationale Veröffentlichungsnummer: WO 2006/105926

(56) Entgegenhaltungen:
- EP-A- 0 570 073
- EP-A- 0 708 170
- WO-A-95/04763
- US-A- 3 413 226
- US-A- 4 021 357
- US-A- 4 880 880
- US-A- 5 095 071

## Beschreibung

Die vorliegende Erfindung betrifft Schmierölzusammensetzungen umfassend Polyalkyl(meth)acrylat-Copolymere mit hervorragenden Eigenschaften.

Die Effizienz von modernen Getrieben, Motoren oder Hydraulikpumpen hängt neben der Beschaffenheit der Maschinenteile auch stark von den Reibeigenschaften des eingesetzten Schmierstoffes ab. Für die Entwicklung solcher Schmierstoffe ist es von besonderer Bedeutung, Kenntnis über die Wirkung der eingesetzten Schmierstoffkomponenten in Bezug auf Filmbildung und Reibung zu haben, wobei die Wahl geeigneter Additive z.B. dazu führen kann, den durchschnittlichen Kraftstoffverbrauch eines Fahrzeugs um einige Prozent zu senken. Als besonders wirkungsvolle Bestandteile eines Schmierstoffs können hierbei Grundöle mit besonders niedriger Viskosität und damit niedriger inhärenter Reibung sowie organische Reibverminderer (*Friction Modifiers*) genannt werden. Ein Beispiel für diesen Trend ist die neueste Generation von sog. Leichtlauf-Motorenölen der SAE Klassen 5W-20, 5W-30 oder OW-20, der sich in analoger Weise auch bei Ölen für manuelle und automatische Getriebe finden lässt.

Durch eine Entwicklung parallel zu den kraftstoffsparenden Schmierstoffen ist der Einsatz von reibmindernden Additiven noch wichtiger geworden: heutige Getriebe- und Pumpengehäuse sind in ihren Ausmaßen deutlich kleiner, sie werden schlechter gekühlt und sowohl Zahnräder als auch Lager müssen höhere Lasten tragen. Dadurch sind die Betriebstemperaturen weitaus höher als in der Vergangenheit. Als Folge davon weist der tribologische Kontakt zwischen zwei sich gegeneinander bewegenden Oberflächen eine reduzierte Filmdicke auf und der Schmierstoff und die darin enthaltenen Additive müssen in der Lage sein, unter diesen Mischreibungsbedingungen einen niedrigen Reibungsverlust zu gewährleisten und die Oberflächen vor Verschleiß zu schützen.

Nach dem heutigen Stand der Technik wird angenommen, dass typische öllösliche reibvermindernde Schmierstoffadditive entweder an der Metalloberfläche eines Reibkontaktes adsorbieren oder sog. Reaktionsschichten bilden. Erstere bestehen üblicherweise aus langkettigen Carbonsäuren und deren Salzen, Estern, Ether, Alkoholen, Aminen, Amiden und Imiden. Als Wirkweise solcher Reibverminderer wird eine Ausrichtung der polaren Gruppen und eine damit verbundene Filmbildung auf der Oberfläche im Reibkontakt angenommen. Durch einen solchen Film wird dann bei Versagen des eigentlichen Ölfilms die Berührung der Festkörper verhindert. Der tatsächliche Mechanismus und der Einfluss von polaren Wechselwirkungen wie Dipol-Dipol-Wechselwirkungen oder Wasserstoffbrückenbindungen ist allerdings nicht abschließend geklärt.

Typische Reaktionsschichten bildende Reibverminderer sind z.B. gesättigte Fettsäureester, Phosphor- und Triphosphorsäureester, Xanthogenate oder schwefelhaltige Fettsäuren. Zu dieser Klasse zählen auch Verbindungen, die unter der tribologischen Beanspruchung im Reibkontakt keine festen, sondern flüssige Reaktionsprodukte mit hoher Tragfähigkeit bilden. Als Beispiele hierfür sind ungesättigte Fettsäuren, Partialester aus Dicarbonsäuren, Dialkylphthalsäureester und sulforierte Olefingemische zu nennen. Die Funktion solcher reibungsmindernder Additive ist der der sog. EP-Additive sehr ähnlich, wobei die Bildung einer 'Reaktionsschicht' im Schmierspalt breites bei milderen Mischreibungsbedingungen ablaufen muss.

Darüber hinaus können auch metallorganische Verbindungen wie Molybdändithiophosphonate und -dicarbamate, organischen Kupferverbindungen, sowie einige Festschmierstoffe wie Graphit und MoS₂ als reibmindernde Zusätze in Schmierstoffen wirken.

Nachteilig an diesen Verbindungen ist deren recht hoher Preis. Darüber hinaus sind viele Verbindungen sehr polar, so dass diese sich nicht in vollsynthetischen Schmierölen lösen.

Die Reibeigenschaften von Schmierstoffen, die öllösliche Polymeren enthalten, ist Bestandteil mehrerer Patentschriften und Publikationen. Dabei wird nur in wenigen Fällen eine Beziehung zwischen den spezifischen Reibeigenschaften und der Anwesenheit von Polymeren oder VI-Verbesserern oder deren Struktur beschrieben:
JP 05271331 beansprucht die Herstellung von Polymeren und deren Einsatz in Schmierstoffen. Beschrieben wird ein Copolymer eines α-Olefins und eines dibasischen Esters und dessen Umsetzung mit Alkanolaminen, Cycloalkanolaminen, heterocyclischen Aminen und Polyalkylen-polyaminen.
   Der dieses statistische Copolymer enthaltende Schmierstoff besitzt gegenüber einer Referenz einen von 0,1104 auf 0,07134 reduzierten Reibkoeffizienten, was am Beispiel eines Falex-Reibtests (ASTM D 2714) gezeigt wird. Nachteilig an diesen Polymeren ist insbesondere deren komplexe Herstellung.
JP 2000355695 *(*US 6426323) beschreibt Schmierstoffzusammensetzungen für kontinuierliche automatische Getriebe (CVT's), die dispergierende VI-Verbesserer enthalten. Dabei werden vorzugsweise Polyalkylmethacrylate mit dispergierenden Comonomeren wie Dimethylaminoethylmethacrylat, 2-Methyl-5-vinylpyridin und N-Vinylpyrrolidon als VI-Verbesserer eingesetzt, um eine verbesserte Oxidationsstabilität zu erlangen. Reibversuche an diesen Schmierstoffen sind exemplarisch beschrieben, allerdings wird nicht auf den Einfluss der o. g. VI-Verbesserer eingegangen.
EP 570073 beschreibt Bor-enthaltende Polyalkylacrylate und -methacrylate als Schmierstoffadditive, die gleichzeitig die Wirkung eines VII's und eines Reibverminderers (friction modifiers) besitzen. Hierbei werden als reibmindernde Komponenten bekannte zyklische Borverbindungen als funktionelle Gruppen in die Seitenketten üblicher PAMA-VI-Verbesserer statistisch eingebaut. Als relevante Tests werden Ergebnisse von SRV (Schwing-Reib-Verschleiß) und LFW-1 Tribometer (ASTM D 2714 = Falex Test) Reibtests im Vergleich zu kommerziellen PAMA VI-Verbesserern beschrieben. Nachteilig an diesen Copolymeren ist deren recht aufwendige Herstellung, so dass derartige Produkte bis heute nicht in größerem Maßstab kommerziell eingesetzt werden.
EP 286996 *(*US 5064546*)* beansprucht Schmierstoffzusammensetzungen einer bestimmten naphthenbasichen Grundölzusammerisetzung, die 0,01-5% eines Friction Modifiers enthalten und besonders für automatische und kontinuierliche Getriebe geeignet sind. VI-Verbesserer, insbesondere PAMA's sind als zusätzliche Komponenten erwähnt, ihr Typ wird aber in Bezug auf das Reibverhalten der Formulierung als unkritisch beurteilt.
US 4699723 beschreibt dispergierende Multifunktions-VI-Verbesserer, aufgebaut aus Ethylen-Propylen-Copolymeren (OCP's), auf die eine dispergierende, antioxidativ wirkende funktionelle Gruppe aufgepfropft ist. Ein Einfluss dieser VII's auf die Reibeigenschaften der resultierenden Schmierstoffe ist nicht beschrieben. Hierbei werden im allgemeinen statistische Copolymere erhalten, die keine reibungsverbesserenden Eigenschaften aufweisen.
US 6444622 und US 6303547 beschreiben reibmodifizierte Schmierstoffe, wobei die Reibeigenschaften durch die Kombination verbesserter klassischer Reibverminderer, in diesem Fall einer C₅-C₆₀ Carbonsäure und eines Amins, beeinflusst werden. Der Zusatz von Polyalkylmethacrylat-VI-Verbesserern wird nur im Zusammenhang mit der Einstellung der Schmierölviskosität (SAE Grad) und der Scherstabilität mit beansprucht.
EP 0747464 beschreibt eine Schmierstoffzusammensetzung mit lang anhaltenden 'anti-shudder' Reibeigenschaften für die Anwendung in automatischen Getrieben. Die Zusammensetzung enthält alkoxylierte Fettsäureamine sowie eine Mischung anderer reibvermindernder Additive (friction modifier). Dispergierende und nicht-dispergierende VI-Verbesserer werden in den Ansprüchen lediglich als weitere Komponenten des Schmierstoffs erwähnt, ohne dass ein Einfluss auf die Reibeigenschaften des Schmierstoffs beschrieben wird.
WO 00/58423 beschreibt Hochleistungs-Motorenöle und andere Schmierstoffe basierend auf einer Mischung von einem Polyalphaolefin mit hohem VI (HVI-PAO) und einem höhermolekularem Verdicker (typischerweise ein hydriertes Poly(styrol-co-isopren), HSI, ein Ethylen-Propylen Copolymer (OCP) oder ein Polyisobutylen (PIB) mit einem gewichtsmittleren Molekulargewicht M_{w} von 10000 bis 100000 g/mol. Den beanspruchten Schmierstoffen werden erhöhte Schmierfilmdicken und guter Verschleißschutz gegenüber dem Stand der Technik zugesprochen.
Die Autoren betonen, dass die Verwendung üblicher hochmolekularer VI-Verbesserer aufgrund des nicht-Newton'schen Verhaltens der resultierenden Öle erhebliche Nachteile aufweist. So soll insbesondere die Dicke des Schmierfilms im Reibkontakt aufgrund der hohen Scherbeanspruchung und der geringen temporären Scherstabilität solcher polymeren Additive reduziert sein. Dieses Verhalten von Schmierstoffen, die Polymere enthalten, wird durch die vorliegende Erfindung widerlegt.
US 6358896 beschreibt Reibverminderer für Motorenölzusammensetzungen mit verbesserter Kraftstoffeffizienz auf Basis von Keto-amiden und -estern. Polymere Viskositätsindexverbesserer sind in der Patentschrift als Komponenten solcher Schierstoffe genannt. Dispergierende VII's sind nur in Bezug auf ihre Wirkung als Dispergiermittel erwähnt.
WO 9524458 *(*US 5622924*)* beanspruchen Viskositätsindexverbesserer mit einem Anteil von min. 70 Gew.-% an Alkylmethacrylaten mit nicht mehr als 10 Kohlenstoffatomen. Neben guten Tieftemperatureigenschaften besitzen die mit solchen VI-Verbesserern formulierten Öle auch verbesserte niedrige Reibeigenschaften, wenn sie in Kombination mit einem molybdänhaltigen Friction Modifier eingesetzt werden.
JP 08157855 beschreibt Schmierstoffe, die VI-Verbesserer enthalten, die die Wirkung eines auf Molybdän basierten Friction Modifier maximieren. Beansprucht werden die gleichen Polymere, wie in WO 9524458 beschrieben.
US 3925217 beansprucht Schmierstoffe, bestehend aus Verbindungen, die einen oder zwei Cyclohexylringe besitzen und für eine verbesserte Filmdicke im Reibkontakt von Rollenlagern sorgen.
   Anmerkung: Diese Patentschrift ist die Basis für sog. Traktionsflüssigkeiten, d.h. Schmierstoffe, die aufgrund ihrer Reibeigenschaften im hydrodynamischen Bereich (bei hohen Geschwindigkeiten) über den Reibkontakt Kräfte übertragen können. Erwünscht sind hier besonders hohe Traktions- bzw. Reibkoeffizienten, um die Kraftübertragung möglichst effizient zu gestalten.
Hiervon leiten sich eine Reihe von Patentschriften ab, die auch Polymere, Polyalkylacrylate oder -methacrylate oder andere VI-Verbesserer mit cyclischen Strukturen beschreiben. Hier sind z.B. zu nennen:
   - WO 8902911 / EP 339088
   - JP 61044997
   - JP 61019697

Der Inhalt dieser Patente bezieht sich jedoch auf die Erreichung eines möglichst hohen Reib-/Traktionskoeffizienten unter o.g. hydrodynamischen Bedingungen, bei denen der Reibkontakt komplett durch einen Schmierfilm getrennt ist. Auch wenn die Beeinflussung der Reibeigenschaften für diese Flüssigkeiten wichtig ist, ist der Effekt der Öle, Additive und insbesondere VI-Verbesserer entgegengesetzt zu denen, die reibmindernd im Gebiet der Mischreibung wirken sollen. So wurden die Traktionseigenschaften von Polymerlösungen untersucht von Kyotani et al. und gefunden, dass Polymere mit zyklischen Seitenketten eine Tendenz zu höheren Reib-/Traktionskoeffizienten zeigen (Kyotani, T.; Yamada, Y.; Tezuka, T.; Yamamoto, H.; Tamai, Y.; Sekiyu Gakkaishi (1987), 30(5), 353-8).

In der wissenschaftlichen Literatur sind teilweise kontroverse Aussagen zum Einfluss von Polymeren auf das Reibverhalten von Schmierstoffen zu finden:
Kugimiya folgert aus seinen Reibversuchen an Schmierölen für automatische Getriebe, dass Viskositätsindexverbesserer - sowohl Polyalkylmethacrylate als auch Olefincopolymere - keinen Einfluss auf die Reibeigenschaften der Öle besitzen (Kugimiya, T.; Toraiborojisuto (2000), 45(5), 387-395).
Zu ähnlichen Ergebnissen kommen Rodgers et al. für Polyalkylmethacrylate, deren N-Vinylpyrrolidon Copolymere und Polyisobutylen in Schmierstoffanwendungen für automatische Getriebe (Rodgers, John J.; Gallopoulos, Nicholas E; ASLE Trans. (1967), 10(1), 102-12, discussion 113-14). Weder Polyalkylmethacrylate noch PIB zeigen eine Änderung der Reibcharakteristika (Reibkurve). Lediglich PMA-N-Vinylpyrrolidon Copolymere führen bzgl. des statischen Reibkoeffizienten eher zu einer Erniedrigung.
Dieses Verhalten wurde jedoch allein auf die höhere Viskosität der in der Studie untersuchten Öle mit VI-Verbesserer zurückgeführt, nicht auf die Struktur des Polymers.

Gunsel et al. berichten über einige VI-Verbesserer, die bis zu 20 nm dicke Filme in Reibkontakten bilden und somit das Erreichen des Grenzreibungsbereiches hin zu langsameren Gleit- und Rollgeschwindigkeiten verschieben können (Gunsel, S.; Smeeth, M.; Spikes, H.; Society of Automotive Engineers, (1996), SP-1209 (Subjects in Engine Oil Rheology and Tribology), 85-109). Hierbei wird kein Zusammenhang zwischen der Struktur der Polymere und deren Einfluss auf das tatsächliche Reibverhalten der Schmierstoffmischung gegeben.

Dagegen finden Sharma et al., dass Viskositätsindexverbesserer, insbesondere Polyalkylmethacrylate in PAO, keinen signifikanten Beitrag zur Filmdicke des Schmierstoffs in einem Reibkontakt leisten (Sharma, S.-K.; Forster, N.-H.; Gschwender, L.-J.; Tribol. Trans. (1993), 36(4), 555-64).

Yoshida folgert aus seinen Verschleißexperimenten sogar, dass Polyalkylmethacrylate sich bei hohen Lasten vor dem eigentlichen Schmierspalt eines Reibkontaktes anreichern, zu einer Ölverarmung und damit zu hoher Reibung im Schmierspalt führen (Yoshida, K.; Tribol. Trans. (1990), 33(20), 229-37).

Problematisch an den bekannten Friction Modifier ist somit deren Preis. Des weiteren ist die Löslichkeit von vielen bekannten reibungsvermindernden Additiven in neuartigen vollsynthetischen Ölen gering.

Darüber hinaus wirken viele der zuvor beschriebenen Additive lediglich als Friction Modifier. Wünschenswert ist jedoch, dass ein Additiv einem Grundöl weitere günstige Eigenschaften verleiht. Hierdurch kann der gesamte Zusatz an Additiven verringert werden, wodurch weitere Kosten gespart werden können.

In Anbetracht des Standes der Technik ist es nun Aufgabe der vorliegenden Erfindung hochwirksame reibungsvermindernde Additive zur Verfügung zu stellen, die besonders kostengünstig hergestellt werden können. Des weiteren war Aufgabe der vorliegenden Erfindung, Additive zur Verfügung zu stellen, die hohe Dispergierfähigkeit, hohen Korrosionsschutz (d.h. hohe Metalldesaktivator-Eigenschaften), hohe Stabilität gegen Oxidation und thermische Belastung sowie eine hohe Scherfestigkeit besitzen. Des weiteren sollten die Additive auch in sehr unpolaren Schmierölen, beispielsweise in vollsynthetischen Ölen in großen Mengen löslich sein. Darüber hinaus war es eine Aufgabe der vorliegenden Erfindung, Additive zur Verfügung zu stellen, die neben einer reibungsvermindernden Wirkung zusätzlich die Fließeigenschaften der Schmieröls verbessern, also eine viskositätsindexverbessernde Wirkung aufweisen.

Gelöst werden diese sowie weitere nicht explizit genannte Aufgaben, die jedoch aus den hierin einleitend diskutierten Zusammenhängen ohne weiteres ableitbar oder erschließbar sind, durch Schmierölzusammensetzungen mit allen Merkmalen des Patentanspruchs 1. Zweckmäßige Abwandlungen der erfindungsgemäßen Schmierölzusammensetzungen werden in den auf Anspruch 1 rückbezogenen Ansprüchen unter Schutz gestellt.

Durch die erfindungsgemäßen Schmierölzusammensetzungen, enthaltend Copolymere erhältlich durch Polymerisation einer Monomerzusammensetzung, die aus
a) 0 bis 40 Gew.-% einer oder mehreren ethylenisch ungesättigten Esterverbindungen der Formel (I) 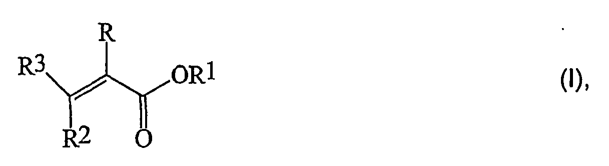 worin R Wasserstoff oder Methyl darstellt, R¹ einen linearen oder verzweigten Alkylrest mit 1 bis 5 Kohlenstoffatomen bedeutet, R² und R³ unabhängig Wasserstoff oder eine Gruppe der Formel -COOR' darstellen, worin R' Wasserstoff oder eine Alkylgruppe mit 1 bis 5 Kohlenstoffatomen bedeutet,
b) 10 bis 99,9 Gew.-% bezogen auf das Gesamtgewicht der ethylenisch ungesättigten Monomere, einer oder mehreren ethylenisch ungesättigten Esterverbindungen der Formel (II) 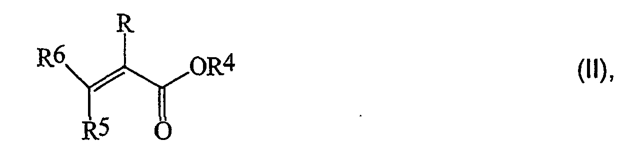 worin R Wasserstoff oder Methyl darstellt, R⁴ einen linearen oder verzweigten Alkylrest mit 6 bis 15 Kohlenstoffatomen bedeutet, R⁵ und R⁶ unabhängig Wasserstoff oder eine Gruppe der Formel -COOR" darstellen, worin R" Wasserstoff oder eine Alkylgruppe mit 6 bis 15 Kohlenstoffatomen bedeutet,
c) 0 bis 80 Gew.-% einer oder mehreren ethylenisch ungesättigten Esterverbindungen der Formel (III) 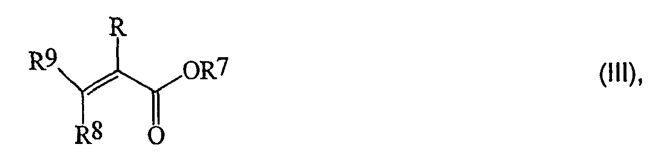 worin R Wasserstoff oder Methyl darstellt, R⁷ einen linearen oder verzweigten Alkylrest mit 16 bis 30 Kohlenstoffatomen bedeutet, R⁸ und R⁹ unabhängig Wasserstoff oder eine Gruppe der Formel -COOR"' darstellen, worin R"' Wasserstoff oder eine Alkylgruppe mit 16 bis 30 Kohlenstoffatomen bedeutet,
d) 0,1 bis 30 Gew.-% einer oder mehreren ethylenisch ungesättigten, polaren Esterverbindungen der Formel (IV) 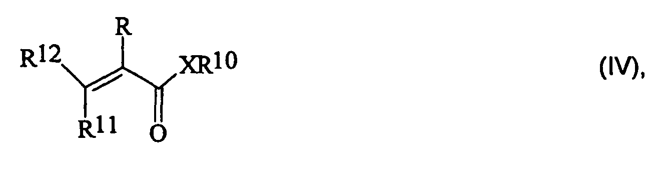 worin R Wasserstoff oder Methyl darstellt, X Sauerstoff, Schwefel oder eine Aminogruppe der Formel -NH- oder -NR^{a}-, worin R^{a} für einen Alkylrest mit 1 bis 40 Kohlenstoffatomen steht, R¹⁰ einen 2 bis 1000 Kohlenstoffatome umfassenden Rest mit mindestens 2 Heteroatomen, R¹¹ und R12 unabhängig Wasserstoff oder eine Gruppe der Formel -COX'R¹⁰' darstellen, worin X' Sauerstoff oder eine Aminogruppe der Formel -NH- oder -NR^{a}'-, worin R^{a}' für einen Alkylrest mit 1 bis 40 Kohlenstoffatomen steht, und R^{10'} einen 1 bis 100 Kohlenstoffatome umfassenden Rest darstellt,
e) 0 bis 50 Gew.-% Comonomer,
   jeweils bezogen auf das Gesamtgewicht der ethylenisch ungesättigten Monomere besteht,
   wobei der Rest R¹⁰ in mindestens einer der Esterverbindungen gemäß Formel (IV) mindestens eine Gruppe der Formel -CO- umfasst, gelingt es auf nicht ohne weiteres vorhersehbare Weise, Additive für Schmierölzusammensetzungen zur Verfügung zu stellen, mit denen die zuvor dargestellten Probleme auf einfache Weise vermindert werden können.

Zugleich lassen sich durch die erfindungsgemäß eingesetzten Copolymere eine Reihe weiterer Vorteile erzielen. Hierzu gehören unter anderem:
➢ Die erfindungsgemäß eingesetzten Copolymere zeigen hervorragende Eigenschaften als Viskositätsindexverbesserer. Die Viskositätsindex verbessernde Wirkung zeigt sich beispielsweise anhand der kinematischen Viskositäten bei 40°C und 100°C gemäß ASTM D 2270.
➢ Des weiteren weisen die erfindungsgemäßen Schmierölzusammensetzungen hervorragende
   Tieftemperatureigenschaften auf. Die Tieftemperatureigenschaften können durch Minirotationsviskosimetriewerte (MRV), die gemäß ASTM D 4684 erhalten werden können, und Scanning-Brookfieldresultate, wie diese sich nach ASTM D 5133, ergeben. Eine stockpunktsverbessernde Wirkung der erfindungsgemäß eingesetzten Copolymere kann beispielsweise gemäß ASTM D 97 bestimmt werden.
➢ Falls bestimmte Fließeigenschaften bei einer vorgegebenen Temperatur erzielt werden sollen, so kann diese bei sehr geringen Mengen an Copolymer der vorliegenden Erfindung erzielt werden.
➢ Die erfindungsgemäß eingesetzten Copolymeren weisen hervorragende Reibeigenschaften auf. Hierdurch schützen diese Copolymere Oberflächen vor Verschleiß.
► Die Copolymere der vorliegenden Erfindung zeigen hervorragende Dispergiereigenschaften. Hierdurch verhindern diese Copolymere eine Bildung von Ablagerungen.
► Die Copolymere bringen ausgezeichneten Korrosionsschutz-Eigenschaften, d.h. Metalldesaktivator-Eigenschaften, mit sich.
➢ Die erfindungsgemäß eingesetzten Copolymere binden hervorragend Metallionen. Hierdurch wird eine vorzeitige Oxidation von Schmierölzusammensetzungen vermindert.
➢ Die erfindungsgemäß eingesetzten Copolymere können kostengünstig hergestellt werden.
➢ Die Copolymere zeigen eine hohe Oxidationsstabilität und sind chemisch sehr beständig.

Die Zusammensetzungen, aus denen die erfindungsgemäß eingesetzten Copolymere erhalten werden, enthalten insbesondere (Meth)acrylate, Maleate und/oder Fumarate, die unterschiedlicheAlkoholreste aufweisen. Der Ausdruck (Meth)acrylate umfaßt Methacrylate und Acrylate sowie Mischungen aus beiden. Diese Monomere sind weithin bekannt. Hierbei kann der Alkylrest linear, cyclisch oder verzweigt sein.
Mischungen, aus denen die erfindungsgemäß eingesetzten Copolymere erhältlich sind, können 0 bis 40 Gew.-%, insbesondere 0,5 bis 20 Gew.-%, bezogen auf das Gesamtgewicht der ethylenisch ungesättigten Monomere, einer oder mehreren ethylenisch ungesättigten Esterverbindungen der Formel (I) enthalten 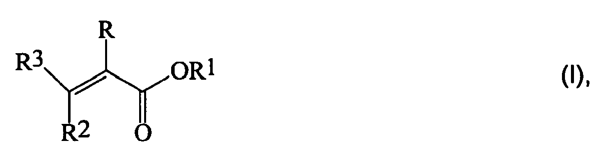 worin R Wasserstoff oder Methyl darstellt, R¹ einen linearen oder verzweigten Alkylrest mit 1 bis 5 Kohlenstoffatomen bedeutet, R² und R³ unabhängig Wasserstoff oder eine Gruppe der Formel -COOR' darstellen, worin R' Wasserstoff oder eine Alkylgruppe mit 1 bis 5 Kohlenstoffatomen bedeutet.

Beispiele für Komponente a) sind unter anderem (Meth)acrylate, Fumarate und Maleate, die sich von gesättigten Alkoholen ableiten, wie Methyl(meth)acrylat, Ethyl(meth)acrylat, n-Propyl(meth)acrylat, iso-Propyl(meth)acrylat, n-Butyl(meth)acrylat, tert-Butyl(meth)acrylat und Pentyl(meth)acrylat;
Cycloalkyl(meth)acrylate, wie Cyclopentyl(meth)acrylat;
(Meth)acrylate, die sich von ungesättigten Alkoholen ableiten, wie 2-Propinyl(meth)acrylat, Allyl(meth)acrylat und Vinyl(meth)acrylat.

Als wesentlichen Bestandteil enthalten die zu polymerisierenden Zusammensetzungen 10 bis 99,9 Gew.-%, insbesondere 20 bis 95 Gew.-%, bezogen auf das Gesamtgewicht der ethylenisch ungesättigten Monomere, einer oder mehreren ethylenisch ungesättigten Esterverbindungen der Formel (II) 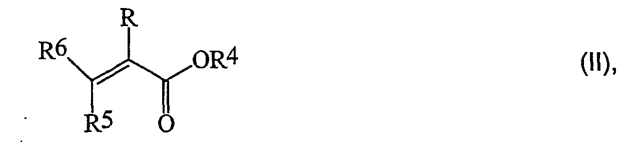 worin R Wasserstoff oder Methyl darstellt, R⁴ einen linearen oder verzweigten Alkylrest mit 6 bis 15 Kohlenstoffatomen bedeutet, R⁵ und R⁶ unabhängig Wasserstoff oder eine Gruppe der Formel -COOR" darstellen, worin R" Wasserstoff oder eine Alkylgruppe mit 6 bis 15 Kohlenstoffatomen bedeutet.

Zu diesen gehören unter anderem
(Meth)acrylate, Fumarate und Maleate, die sich von gesättigten Alkoholen ableiten, wie Hexyl(meth)acrylat, 2-Ethylhexyl(meth)acrylat, Heptyl(meth)acrylat, 2-tert.-Butylheptyl(meth)acrylat, Octyl(meth)acrylat, 3-iso-Propylheptyl(meth)acrylat, Nonyl(meth)acrylat, Decyl(meth)acrylat, Undecyl(meth)acrylat, 5-Methylundecyl(meth)acrylat, Dodecyl(meth)acrylat, 2-Methyldodecyl(meth)acrylat, Tridecyl(meth)acrylat, 5-Methyltridecyl(meth)acrylat, Tetradecyl(meth)acrylat, Pentadecyl(meth)acrylat; (Meth)acrylate, die sich von ungesättigten Alkoholen ableiten, wie z. B. Oleyl(meth)acrylat; Cycloalkyl(meth)acrylate, wie 3-Vinylcyclohexyl(meth)acrylat, Cyclohexyl(meth)acrylat, Bornyl(meth)acrylat; sowie die entsprechenden Fumarate und Maleate.

Darüber hinaus können die erfindungsgemäß zu verwendenden Monomermischungen 0 bis 80 Gew.-%, vorzugsweise 0,5 bis 60 Gew.-%, bezogen auf das Gesamtgewicht der ethylenisch ungesättigten Monomere, einer oder mehreren ethylenisch ungesättigten Esterverbindungen der Formel (III) aufweisen 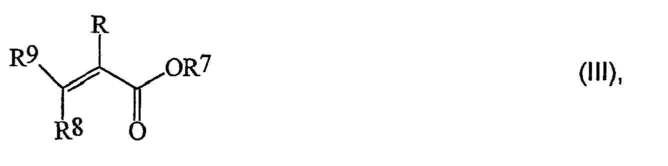 worin R Wasserstoff oder Methyl darstellt, R⁷ einen linearen oder verzweigten Alkylrest mit 16 bis 30 Kohlenstoffatomen bedeutet, R⁸ und R⁹ unabhängig Wasserstoff oder eine Gruppe der Formel -COOR"' darstellen, worin R'" Wasserstoff oder eine Alkylgruppe mit 16 bis 30 Kohlenstoffatomen bedeutet.

Beispiele für Komponente c) sind unter anderem (Meth)acrylate, die sich von gesättigten Alkoholen ableiten, wie Hexadecyl(meth)acrylat, 2-Methylhexadecyl(meth)acrylat, Heptadecyl(meth)acrylat, 5-iso-Propylheptadecyl(meth)acrylat, 4-tert.-Butyloctadecyl(meth)acrylat, 5-Ethyloctadecyl(meth)acrylat, 3-iso-Propyloctadecyl(meth)acrylat, Octadecyl(meth)acrylat, Nonadecyl(meth)acrylat, Eicosyl(meth)acrylat, Cetyleicosyl(meth)acrylat, Stearyleicosyl(meth)acrylat, Docosyl(meth)acrylat und/oder Eicosyltetratriacontyl(meth)acrylat;
Cycloalkyl(meth)acrylate, wie 2,4,5-Tri-t-butyl-3-Vinylcyclohexyl(meth)acrylat, 2,3,4,5-Tetra-t-butylcyclohexyl(meth)acrylat;
Oxiranylmethacrylate, wie
10,11-Epoxyhexadecylmethacrylat; sowie die entsprechenden Fumarate und Maleate.

Die Esterverbindungen mit langkettigem Alkoholrest, insbesondere die Komponenten (b) und (c), lassen sich beispielsweise durch Umsetzen von (Meth)acrylaten, Fumaraten, Maleaten und/oder den entsprechenden Säuren mit langkettigen Fettalkoholen erhalten, wobei im allgemeinen eine Mischung von Estern, wie beispielsweise (Meth)acrylaten mit verschieden langkettigen Alkoholresten entsteht. Zu diesen Fettalkoholen gehören unter anderem Oxo Alcohol® 7911 und Oxo Alcohol® 7900, Oxo Alcohol® 1100; Alfol® 610, Alfol® 810, Lial® 125 und Nafol®-Typen (Sasol Olefins & Surfactant GmbH); Alphanol® 79 (ICI); Epal® 610 und Epal® 810 (Ethyl Corporation); Linevol® 79, Linevol® 911 und Neodol® 25E (Shell AG); Dehydad®, Hydrenol®- und Lorol®-Typen (Cognis); Acropol® 35 und Exxal® 10 (Exxon Chemicals GmbH); Kalcol® 2465 (Kao Chemicals).

Als obligatorischen Bestandteil enthalten die zu polymerisierenden Zusammensetzungen 0, 1 bis 30 Gew.-%, insbesondere 0,5 bis 10 Gew.-%, bezogen auf das Gesamtgewicht der ethylenisch ungesättigten Monomere, einer oder mehreren ethylenisch ungesättigten Esterverbindungen der Formel (IV) 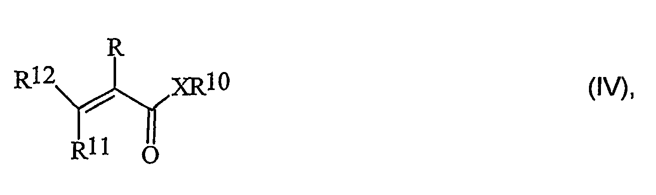 worin R Wasserstoff oder Methyl darstellt, X Sauerstoff, Schwefel oder eine Aminogruppe der Formel -NH- oder-NR^{a}-, worin R^{a} für einen Alkylrest mit 1 bis 40 Kohlenstoffatomen steht, R¹⁰ einen 2 bis 1000 Kohlenstoffatome umfassenden Rest mit mindestens 2 Heteroatomen, R¹¹ und R12 unabhängig Wasserstoff oder eine Gruppe der Formel -COX'R¹⁰' darstellen, worin X' Sauerstoff oder eine Aminogruppe der Formel -NH- oder -NR^{a'}-, worin R^{a'} für einen Alkylrest mit 1 bis 40 Kohlenstoffatomen steht, und R¹⁰' einen 1 bis 100 Kohlenstoffatome umfassenden Rest darstellt.

In Formel (IV) stellt X Sauerstoff, Schwefel oder eine Aminogruppe der Formel - NH- oder -NR^{a}- dar, worin R^{a} für einen Alkylrest mit 1 bis 40, bevorzugt 1 bis 4 Kohlenstoffatomen steht.

Die Reste R¹¹ und R12 stellen in Formel (IV) unabhängig Wasserstoff oder eine Gruppe der Formel-COX'R¹⁰'dar, worin X' Sauerstoff, Schwefel oder eine Aminogruppe der Formel -NH- oder -NR^{a'}- bedeuten, worin R^{a'} für einen Alkylrest mit 1 bis 40 Kohlenstoffatomen, bevorzugt 1 bis 4 Kohlenstoffatomen steht, und R¹⁰' einen 1 bis 100, bevorzugt 1 bis 30 und besonders bevorzugt 1 bis 15 Kohlenstoffatome umfassenden Rest darstellt. Der Ausdruck "1 bis 100 Kohlenstoff umfassenden Rest" kennzeichnet Reste organischer Verbindungen mit 1 bis 100 Kohlenstoffatomen. Er umfasst aromatische und heteroaromatische Gruppen sowie Alkyl-, Cycloalkyl-, Alkoxy-, Cycloalkoxy-, Alkenyl-, Alkanoyl-, Alkoxycarbonylgruppen sowie heteroalipatische Gruppen. Dabei können die genannten Gruppen verzweigt oder nicht verzweigt sein. Der Rest R¹⁰ stellt eine 2 bis 1000, insbesondere 2 bis 100, vorzugsweise 2 bis 20 Kohlenstoffatome umfassenden Rest dar. Der Ausdruck "2 bis 1000 Kohlenstoff umfassenden Rest" kennzeichnet Reste organischer Verbindungen mit 2 bis 1000 Kohlenstoffatomen. Er umfasst aromatische und heteroaromatische Gruppen sowie Alkyl-, Cycloalkyl-, Alkoxy-, Cycloalkoxy-, Alkenyl-, Alkanoyl-, Alkoxycarbonylgruppen sowie heteroalipatische Gruppen. Dabei können die genannten Gruppen verzweigt oder nicht verzweigt sein. Des weiteren können diese Gruppen übliche Substituenten aufweisen. Substituenten sind beispielsweise lineare und verzweigte Alkylgruppen mit 1 bis 6 Kohlenstoffatome, wie beispielsweise Methyl, Ethyl, Propyl, Butyl, Pentyl, 2-Methylbutyl oder Hexyl; Cycloalkylgruppen, wie beispielsweise Cyclopentyl und Cyclohexyl; aromatische Gruppen, wie Phenyl oder Naphthyl; Aminogruppen, Ethergruppen, Estergruppen sowie Halogenide.

Erfindungsgemäß bezeichnen aromatische Gruppen Reste ein oder mehrkerniger aromatischer Verbindungen mit vorzugsweise 6 bis 20, insbesondere 6 bis 12 C-Atomen. Heteroaromatische Gruppen kennzeichnen Arylreste, worin mindestens eine CH-Gruppe durch N ersetzt ist und/oder mindestens zwei benachbarte CH-Gruppen durch S, NH oder O ersetzt sind, wobei heteroaromatische Gruppen 3 bis 19 Kohlenstoffatome aufweisen.

Erfindungsgemäß bevorzugte aromatische oder heteroaromatische Gruppen leiten sich von Benzol, Naphthalin, Biphenyl, Diphenylether, Diphenylmethan, Diphenyldimethylmethan, Bisphenon, Diphenylsulfon, Thiophen, Furan, Pyrrol, Thiazol, Oxazol, Imidazol, Isothiazol, Isoxazol, Pyrazol, 1,3,4-Oxadiazol, 2,5-Diphenyl-1,3,4-oxadiazol, 1,3,4-Thiadiazol, 1,3,4-Triazol, 2,5-Diphenyl-1,3,4-triazol, 1,2,5-Triphenyl-1,3,4-triazol, 1,2,4-Oxadiazol, 1,2,4-Thiadiazol, 1,2,4-Triazol, 1,2,3-Triazol, 1,2,3,4-Tetrazol, Benzo[b]thiophen, Benzo[b]furan, Indol, Benzo[c]thiophen, Benzo[c]furan, Isoindol, Benzoxazol, Benzothiazol, Benzimidazol, Benzisoxazol, Benzisothiazol, Benzopyrazol, Benzothiadiazol, Benzotriazol, Dibenzofuran, Dibenzothiophen, Carbazol, Pyridin, Bipyridin, Pyrazin, Pyrazol, Pyrimidin, Pyridazin, 1,3,5-Triazin, 1,2,4-Triazin, 1,2,4,5-Triazin, Tetrazin, Chinolin, Isochinolin, Chinoxalin, Chinazolin, Cinnolin, 1,8-Naphthyridin, 1,5-Naphthyridin, 1,6-Naphthyridin, 1,7-Naphthyridin, Phthalazin, Pyridopyrimidin, Purin, Pteridin oder Chinolizin, 4H-Chinolizin, Diphenylether, Anthracen, Benzopyrrol, Benzooxathiadiazol, Benzooxadiazol, Benzopyridin, Benzopyrazin, Benzopyrazidin, Benzopyrimidin, Benzotriazin, Indolizin, Pyridopyridin, Imidazopyrimidin, Pyrazinopyrimidin, Carbazol, Aciridin, Phenazin, Benzochinolin, Phenoxazin, Phenothiazin, Acridizin, Benzopteridin, Phenanthrolin und Phenanthren ab, die gegebenenfalls auch substituiert sein können.

Zu den bevorzugten Alkylgruppen gehören die Methyl-, Ethyl-, Propyl-, Isopropyl-, 1-Butyl-, 2-Butyl-, 2-Methylpropyl-, tert.-Butylrest, Pentyl-, 2-Methylbutyl-, 1,1-Dimethylpropyl-, Hexyl-, Heptyl-, Octyl-, 1,1,3,3-Tetramethylbutyl, Nonyl-, 1-Decyl-, 2-Decyl-, Undecyl-, Dodecyl-, Pentadecyl- und die Eicosyl-Gruppe.

Zu den bevorzugten Cycloalkylgruppen gehören die Cyclopropyl-, Cyclobutyl-, Cyclopentyl-, Cyclohexyl-, Cycloheptyl- und die Cyclooctyl-Gruppe, die gegebenenfalls mit verzweigten oder nicht verzweigten Alkylgruppen substituiert sind.

Zu den bevorzugten Alkenylgruppen gehören die Vinyl-, Allyl-, 2-Methyl-2-propen-, 2-Butenyl-, 2-Pentenyl-, 2-Decenyl- und die 2-Eicosenyl-Gruppe.

Zu den bevorzugten Alkinylgruppen gehören die Ethinyl-, Propargyl-, 2-Methyl-2- propin, 2-Butinyl-, 2-Pentinyl- und die 2-Decinyl-Gruppe.

Zu den bevorzugten Alkanoylgruppen gehören die Formyl-, Acetyl-, Propionyl-, 2-Methylpropionyl-, Butyryl-, Valeroyl-, Pivaloyl-, Hexanoyl-, Decanoyl- und die Dodecanoyl-Gruppe.

Zu den bevorzugten Alkoxycarbonylgruppen gehören die Methoxycarbonyl-, Ethoxycarbonyl-, Propoxycarbonyl-, Butoxycarbonyl-, tert.-ButoxycarbonylGruppe, Hexyloxycarbonyl-, 2-Methylhexyloxycarbonyl-, Decyloxycarbonyl- oder Dodecyloxycarbonyl-Gruppe.

Zu den bevorzugten Alkoxygruppen gehören Alkoxygruppen, deren Kohlenwasserstoffrest eine der vorstehend genannten bevorzugten Alkylgruppen ist.

Zu den bevorzugten Cycloalkoxygruppen gehören Cycloalkoxygruppen, deren Kohlenwasserstoffrest eine der vorstehend genannten bevorzugten Cycloalkylgruppen ist.

Zu den bevorzugten Heteroatomen, die im Rest R¹⁰ enthalten sind gehören unter anderem Sauerstoff, Stickstoff, Schwefel, Bor, Silicium und Phosphor, wobei Sauerstoff und Stickstoff bevorzugt sind.

Der Rest R¹⁰ umfasst mindestens zwei, bevorzugt mindestens drei Heteroatome.

Vorzugsweise weist der Rest R¹⁰ in Esterverbindungen der Formel (IV) mindestens 2 unterschiedliche Heteroatome auf. Hierbei kann der Rest R¹⁰ in mindestens einer der Esterverbindungen der Formel (IV) mindestens ein Stickstoffatom und mindestens ein Sauerstoffatom umfassen.

Gemäß einem besonderen Aspekt der vorliegenden Erfindung kann mindestens ein Heteroatom im Rest R¹⁰ in mindestens einer der Esterverbindungen der Formel (IV) über mindestens 4 Atome, besonders bevorzugt über mindestens 6 Atome von der Gruppe X getrennt sein.

Vorzugsweise stellt der Rest R¹⁰ in mindestens einer der Esterverbindungen gemäß Formel (IV) eine Gruppe der Formel (V) dar 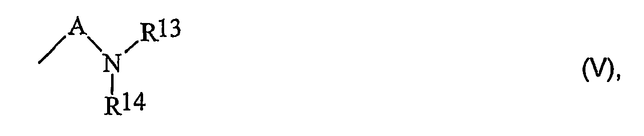 worin A eine verbindende Gruppe mit 1 bis 500 Kohlenstoffatomen, bevorzugt 1 bis 100 Kohlenstoffatome und besonders bevorzugt 1 bis 50 Kohlenstoffatome und die Reste R¹³ und R¹⁴ jeweils unabhängig Wasserstoff oder eine Alkylgruppe mit 1 bis 40 Kohlenstoffatomen, besonders bevorzugt 1 bis 20 Kohlenstoffatome und ganz besonders bevorzugt 1 bis 4 Kohlenstoffatome bedeuten. Der Ausdruck "verbindende Gruppe mit 1 bis 500 Kohlenstoffatomen" kennzeichnet Reste organischer Verbindungen, die 1 bis 500 Kohlenstoffatome umfassen. Er umfasst aromatische und heteroaromatische Gruppen sowie Alkyl-, Cycloalkyl-, Alkoxy-, Cycloalkoxy-, Alkenyl-, Alkanoyl-, Alkoxycarbonylgruppen sowie heteroalipatische Gruppen. Diese Reste wurden zuvor näher erläutert.

Zu den bevorzugten verbindenden Gruppen in Formel (V) gehören Gruppen der Formel (VI) 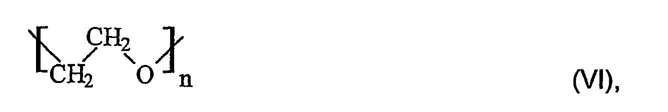 worin n eine ganze Zahl im Bereich von 1 bis 8, bevorzugt 1 bis 6 und besonders bevorzugt 1 bis 3 bedeutet.

Vorzugsweise stellt der Rest R¹⁰ in mindestens einer Esterverbindung der Formel (IV) eine Gruppe der Formel (VII) dar 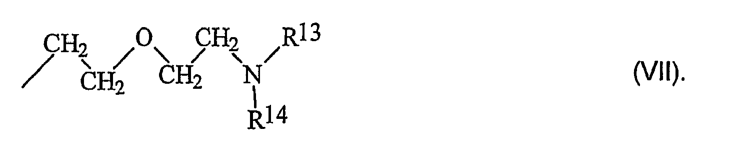 Besonders bevorzugt umfasst die Komponente d) Dimethylaminodiglykolmethacrylat (2-[2-(Dimethylamino)ethoxy]ethylmethacrylat; 2-Methyl-2-propensäure-2-[2-(dimethylamino) ethoxy]ethyl ester) gemäß Formel (VIII)

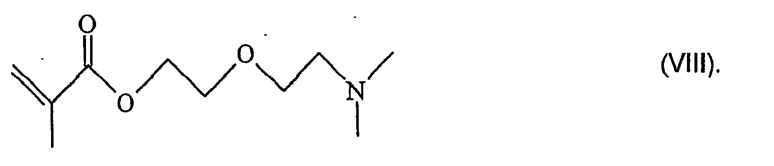

Gemäß einem weiteren Aspekt der vorliegenden Erfindung kann der Rest R¹⁰ in mindestens einer der Esterverbindungen gemäß Formel (IV) mindestens eine, besonders bevorzugt mindestens zwei Gruppen der Formel -CO- umfassen. Die Gruppen der Formel -CO- können Carbonylgruppen von Ketonen und/oder Aldehyden, Carbonylgruppen von Carbonsäuren, Carbonsäureestern und/oder Carbonsäureamiden und/oder Carbonylgruppen von Kohlensäurederivaten, insbesondere von Harnstoffgruppen und/oder Urethangruppen darstellen.

Hierbei können mindestens zwei Gruppen der Formel -CO- über höchstens 4 Atome miteinander verbunden sein.

Vorzugsweise kann der Rest R¹⁰ in mindestens einer Esterverbindung der Formel (IV) eine Gruppe der Formel (IX) darstellen

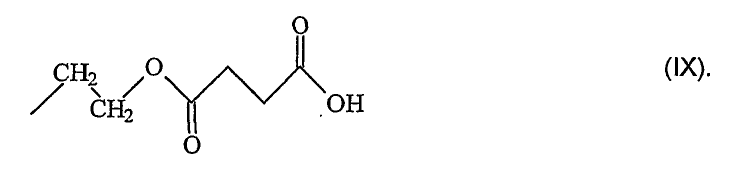

Besonders bevorzugt umfasst die Komponente d) Bernsteinsäure-mono-2-methacryloyloxyethylester gemäß Formel (X)

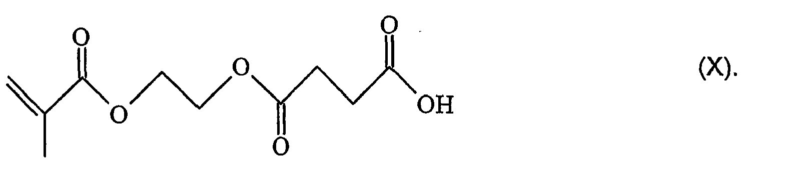

Vorzugsweise kann der Rest R¹⁰ in mindestens einer Esterverbindung der Formel (IV) eine Gruppe der Formel (X1) darstellen

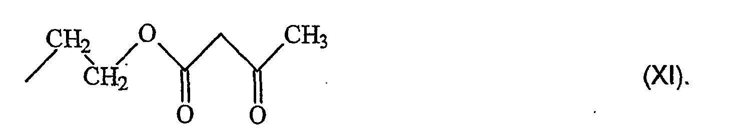

Besonders bevorzugt umfasst die Komponente d) 2-Acetoacetoxyethylmethacrylat (3-Oxo-butansäure-2-[(2-methyl-1-oxo-2-propenyl)oxy] ethyl ester) gemäß Formel (XII)

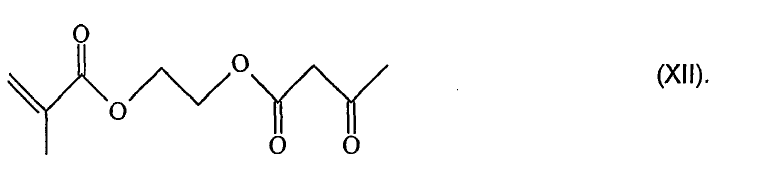

Gemäß einem weiteren Aspekt der vorliegenden Erfindung kann der Rest R¹⁰ in mindestens einer der Esterverbindungen gemäß Formel (IV) mindestens eine Gruppe der Formel -CO- und mindestens ein Stickstoffatom umfassen.

Hierbei kann der Rest R¹⁰ in mindestens einer der Esterverbindungen gemäß Formel (IV) mindestens eine Harnstoffgruppe aufweisen, wobei Harnstoffgruppen im allgemeinen durch die Formel -NR^{b}-CO-NR^{c}- dargestellt werden können, worin die Reste R^{b} und R^{c} jeweils unabhängig Wasserstoff oder eine Gruppe mit 1 bis 40 Kohlenstoffatomen, bevorzugt 1 bis 20 Kohlenstoffatome und besonders bevorzugt 1 bis 4 Kohlenstoffatomen darstellen oder die Reste Reste R^{b} und R^{c} einen Ring mit 1 bis 80 Kohlenstoffatome bilden können.

Vorzugsweise kann der Rest R¹⁰ in mindestens einer Esterverbindung der Formel (IV) eine Gruppe der Formel (XIII) darstellen 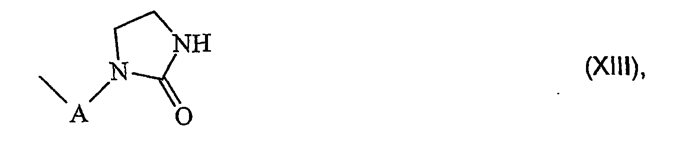 worin A eine verbindende Gruppe mit 1 bis 500 Kohlenstoffatomen, bevorzugt 1 bis 100 Kohlenstoffatome und besonders bevorzugt 1 bis 50 Kohlenstoffatome bedeutet. Der Begriff "verbindende Gruppe mit 1 bis 500 Kohlenstoffatomen" wurde zuvor näher erläutert.

Besonders bevorzugt umfasst die Komponente d) N-(2-Methacryloyloxyethyl)ethylenharnstoff (2-Methyl-2-propensäure-2-(2-oxo-1-imidazolidinyl) ethyl ester) gemäß Formel (XIV)

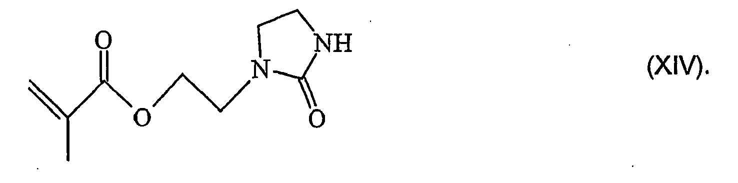

Von den ethylenisch ungesättigten Esterverbindungen sind die (Meth)acrylate gegenüber den Maleaten und Fumaraten besonders bevorzugt, d.h. R², R³, R⁵, R⁶, R⁸, R⁹ R¹¹ und R¹² der Formeln (I), (II), (III) und (IV) stellen in besonders bevorzugten Ausführungsformen Wasserstoff dar.

Monomere gemäß Komponente d) können ähnlich den Monomeren gemäß der Komponenten b) oder c) durch Umesterung von Methyl(meth)acrylaten mit entsprechenden Alkoholen, Aminen und/oder Thiolen erhalten werden. Des Weiteren sind einige dieser Monomere kommerziell erhältlich.

Die Komponente e) umfaßt insbesondere ethylenisch ungesättigte Monomere, die sich mit den ethylenisch ungesättigten Esterverbindungen der Formeln (I), (II), (III) und/oder (IV) copolymerisieren lassen.

Jedoch sind Comonomere zur Polymerisation gemäß der vorliegenden Erfindung besonders geeignet, die der Formel entsprechen: 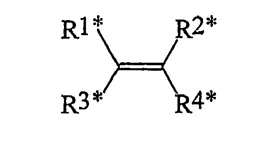 worin R^{1*} und R^{2*} unabhängig ausgewählt sind aus der Gruppe bestehend aus Wasserstoff, Halogene, CN, lineare oder verzweigte Alkylgruppen mit 1 bis 20, vorzugsweise 1 bis 6 und besonders bevorzugt 1 bis 4 Kohlenstoffatomen, welche mit 1 bis (2n+1) Halogenatomen substituiert sein können, wobei n die Zahl der Kohlenstoffatome der Alkylgruppe ist (beispielsweise CF₃), α, β-ungesättigte lineare oder verzweigte Alkenyl- oder Alkynylgruppen mit 2 bis 10, vorzugsweise von 2 bis 6 und besonders bevorzugt von 2 bis 4 Kohlenstoffatomen, welche mit 1 bis (2n-1) Halogenatomen, vorzugsweise Chlor, substituiert sein können, wobei n die Zahl der Kohlenstoffatome der Alkylgruppe, beispielsweise CH₂=CCl-, ist, Cycloalkylgruppen mit 3 bis 8 Kohlenstoffatomen, welche mit 1 bis (2n-1) Halogenatomen, vorzugsweise Chlor, substituiert sein können, wobei n die Zahl der Kohlenstoffatome der Cycloalkylgruppe ist; C(=Y*)R^{5*}, C(=Y*)NR^{6*}R^{7*}, Y*C(=Y*)R^{5*}, SOR^{5*}, SO₂R^{5*}, OSO₂R^{5*}, NR^{8*}SO₂R^{5*}, PR^{5*}2, P(=Y*)R^{5*}₂, Y*PR^{5*}₂, Y*P(=Y*)R^{5*}₂, NR^{8*}₂ welche mit einer zusätzlichen R^{8*}-, Aryl- oder Heterocyclyl-Gruppe quaternärisiert sein kann, wobei Y* NR^{8*}, S oder O, vorzugsweise O sein kann; R^{5*} eine Alkylgruppe mit 1 bis 20 Kohlenstoffatomen, eine Alkylthio mit 1 bis 20 Kohlenstoffatomen, OR¹⁵ (R¹⁵ ist Wasserstoff oder ein Alkalimetall), Alkoxy von 1 bis 20 Kohlenstoffatomen, Aryloxy oder Heterocyklyloxy ist; R^{6*} und R^{7*} unabhängig Wasserstoff oder eine Alkylgruppe mit 1 bis 20 Kohlenstoffatomen sind, oder R^{6*} und R^{7*} können zusammen eine Alkylengruppe mit 2 bis 7 vorzugsweise 2 bis 5 Kohlenstoffatomen bilden, wobei sie einen 3 bis 8-gliedrigen, vorzugsweise 3 bis 6-gliedrigen Ring bilden, und R^{8*} Wasserstoff, lineare oder verzweigte Alkyl- oder Arylgruppen mit 1 bis 20 Kohlenstoffatomen sind; R^{3*} und R^{4*} unabhängig ausgewählt aus der Gruppe bestehend aus Wasserstoff, Halogen (vorzugsweise Fluor oder Chlor), Alkylgruppen mit 1 bis 6 Kohlenstoffatomen und CO0R^{9*}, worin R^{9*} Wasserstoff, ein Alkalimetall oder eine Alkylgruppe mit 1 bis 40 Kohlenstoffatomen ist, sind, oder R^{1*} und R^{3*} können zusammen eine Gruppe der Formel (CH₂)ₙ, bilden, welche mit 1 bis 2n' Halogenatomen oder C₁ bis C₄ Alkylgruppen substituiert sein kann, oder der Formel C(=O)-Y*-C(=O) bilden, wobei n' von 2 bis 6, vorzugsweise 3 oder 4 ist und Y* wie zuvor definiert ist; und wobei zumindest 2 der Reste R^{1*}, R^{2*}, R^{3*} und R^{4*} Wasserstoff oder Halogen sind.

Hierzu gehören unter anderem Hydroxylalkyl(meth)acrylate, wie
3-Hydroxypropylmethacrylat,
3,4-Dihydroxybutylmethacrylat,
2-Hydroxyethylmethacrylat,
2-Hydroxypropylmethacrylat,
2,5-Dimethyl-1,6-hexandiol(meth)acrylat,
1,10-Decandiol(meth)acrylat;
Aminoalkyl(meth)acrylate, wie N-(3-Dimethylaminopropyl)methacrylamid, 3-Diethylaminopentylmethacrylat,
3-Dibutylaminohexadecyl(meth)acrylat;
Nitrile der (Meth)acrylsäure und andere stickstoffhaltige Methacrylate, wie
N-(Methacryloyloxyethyl)düsobutylketimin,
N-(Methacryloyloxyethyl)dihexadecylketimin,
Methacryloylamidoacetonitril,
2-Methacryloyloxyethylmethylcyanamid,
Cyanomethylmethacrylat;
Aryl(meth)acrylate, wie Benzylmethacrylat oder
Phenylmethacrylat, wobei die Arylreste jeweils unsubstituiert oder bis zu vierfach substituiert sein können;
Vinylhalogenide, wie beispielsweise Vinylchlorid, Vinylfluorid, Vinylidenchlorid und Vinylidenfluorid;
Vinylester, wie Vinylacetat;
Styrol, substituierte Styrole mit einem Alkylsubstituenten in der Seitenkette, wie z. B. α-Methylstyrol und α-Ethylstyrol, substituierte Styrole mit einem Alkylsubstitutenten am Ring, wie Vinyltoluol und p-Methylstyrol, halogenierte Styrole, wie beispielsweise Monochlorstyrole, Dichlorstyrole, Tribromstyrole und Tetrabromstyrole;
Heterocyclische Vinylverbindungen, wie 2-Vinylpyridin, 3-Vinylpyridin, 2-Methyl-5-vinylpyridin, 3-Ethyl-4-vinylpyridin, 2,3-Dimethyl-5-vinylpyridin, Vinylpyrimidin, Vinylpiperidin, 9-Vinylcarbazol, 3-Vnylcarbazol, 4-Vinylcarbazol, 1-Vinylimidazol, 2-Methyl-1-vinylimidazol, N-Vinylpyrrolidon, 2-Vinylpyrrolidon, N-Vinylpyrrolidin, 3-Vinylpyrrolidin, N-Vinylcaprolactam, N-Vinylbutyrolactam, Vinyloxolan, Vinylfuran, Vinylthiophen, Unylthiolan, Vinylthiazole und hydrierte Vinylthiazole, Vinyloxazole und hydrierte Vinyloxazole;
Vinyl- und Isoprenylether;
Maleinsäure und Maleinsäurederivate, wie beispielsweise Mono- und Diester der Maleinsäure, Maleinsäureanhydrid, Methylmaleinsäureanhydrid, Maleinimid, Methylmaleinimid;
Fumarsäure und Fumarsäurederivate, wie beispielsweise Mono- und Diester der Fumarsäure;
Diene wie beispielsweise Divinylbenzol.

Diese Komponenten können einzeln oder als Mischungen eingesetzt werden. Voraussetzung ist allerdings, daß mindestens zwei verschiedene Monomere polymerisiert werden.

Bevorzugte Copolymere weisen eine in Chloroform bei 25°C gemessene spezifische Viskosität η_{sp/c} im Bereich von 8 bis 74 ml/g, besonders bevorzugt im Bereich von 11 bis 55 ml/g, gemessen gemäß ISO 1628-6.

Die erfindungsgemäßen Copolymere können im Allgemeinen ein Molekulargewicht im Bereich von 1 000 bis 1 000 000 g/mol, vorzugsweise im Bereich von 10*10³ bis 500*10³ g/mol und besonders bevorzugt im Bereich von 20*10³ bis 300*10³ g/mol aufweisen, ohne dass hierdurch eine Beschränkung erfolgen soll. Diese Werte beziehen sich auf das Gewichtsmittel des Molekulargewichts der polydispersen Polymere in der Zusammensetzung. Diese Größe kann durch GPC ermittelt werden.

Die bevorzugten Copolymere, die durch Polymerisation von ungesättigten Esterverbindungen erhalten werden können, weisen vorzugsweise eine Polydispersität M_{w}/Mₙ im Bereich von 1,05 bis 4,0 auf. Diese Größe kann durch GPC ermittelt werden.

Die Herstellung der Polyalkylester aus den zuvor beschriebenen Zusammensetzungen ist an sich bekannt. So können diese Polymere insbesondere durch radikalische Polymerisation, sowie verwandte Verfahren, wie beispielsweise ATRP (=Atom Transfer Radical Polymerisation) oder RAFT (=Reversible Addition Fragmentation Chain Transfer) erfolgen.

Die übliche freie radikalische Polymerisation ist u.a. in Ullmanns's Encyclopedia of Industrial Chemistry, Sixth Edition dargelegt. Im Allgemeinen werden hierzu ein Polymerisationsinitiator sowie ein Kettenüberträger eingesetzt.

Zu den verwendbaren Initiatoren gehören unter anderem die in der Fachwelt weithin bekannten Azoinitiatoren, wie AIBN und 1,1-Azobiscyclohexancarbonitril, sowie Peroxyverbindungen, wie Methylethylketonperoxid, Acetylacetonperoxid, Dilaurylperoxyd, tert.-Butylper-2-ethylhexanoat (oft auch bezeichnet als tert-Butylperoctoat tBPO), Ketonperoxid, tert-Butylperoctoat, Methylisobutylketonperoxid, Cyclohexanonperoxid, Dibenzoylperoxid, tert.-Butylperoxybenzoat, tert.-Butylperoxyisopropylcarbonat, 2,5-Bis(2-ethylhexanoyl-peroxy)-2,5-dimethylhexan, tert.-Butylperoxy-2-ethylhexanoat, tert.-Butylperoxy-3,5,5-trimethylhexanoat, Dicumylperoxid, 1,1-Bis(tert.-butylperoxy)cyclohexan, 1,1-Bis(tert.-butylperoxy)3,3,5-trimethylcyclohexan, Cumylhydroperoxid, tert.-Butylhydroperoxid, Bis(4-tert.-butylcyclohexyl)peroxydicarbonat, Mischungen von zwei oder mehr der vorgenannten Verbindungen miteinander sowie Mischungen der vorgenannten Verbindungen mit nicht genannten Verbindungen, die ebenfalls Radikale bilden können. Als Kettenüberträger eignen sich insbesondere öllösliche Mercaptane wie beispielsweise tert-Dodecylmercaptan oder 2-Mercaptoethanol oder auch Kettenüberträger aus der Klasse der Terpene, wie beispielsweise Terpinolen.

Das ATRP-Verfahren ist an sich bekannt. Es wird angenommen, dass es sich hierbei um eine "lebende" radikalische Polymerisation handelt, ohne dass durch die Beschreibung des Mechanismus eine Beschränkung erfolgen soll. In diesen Verfahren wird eine Übergangsmetallverbindung mit einer Verbindung umgesetzt, welche eine übertragbare Atomgruppe aufweist. Hierbei wird die übertragbare Atomgruppe auf die Übergangsmetallverbindung transferiert, wodurch das Metall oxidiert wird. Bei dieser Reaktion bildet sich ein Radikal, das an ethylenische Gruppen addiert. Die Übertragung der Atomgruppe auf die Übergangsmetallverbindung ist jedoch reversibel, so dass die Atomgruppe auf die wachsende Polymerkette rückübertragen wird, wodurch ein kontrolliertes Polymerisationssystem gebildet wird. Dementsprechend kann der Aufbau des Polymers, das Molekulargewicht und die Molekulargewichtsverteilung gesteuert werden.
Diese Reaktionsführung wird beispielsweise von J-S. Wang, et al., J. Am. Chem. Soc., Vol. 117, p. 5614 - 5615 (1995), von Matyjaszewski, Macromolecules, Vol. 28, p. 7901 - 7910 (1995) beschrieben. Darüber hinaus offenbaren die Patentanmeldungen WO 96/30421, WO 97/47661, WO 97/18247, WO 98/40415 und WO 99/10387 Varianten der zuvor erläuterten ATRP.

Des Weiteren können die erfindungsgemäßen Polymere beispielsweise auch über RAFT-Methoden erhalten werden. Dieses Verfahren ist beispielsweise in WO 98/01478 und WO 2004/083169 ausführlich dargestellt, worauf für Zwecke der Offenbarung ausdrücklich Bezug genommen wird.

Die Polymerisation kann bei Normaldruck, Unter- oder Überdruck durchgeführt werden. Auch die Polymerisationstemperatur ist unkritisch. Im allgemeinen liegt sie jedoch im Bereich von -20° - 200°C, vorzugsweise 0° - 130°C und besonders bevorzugt 60° - 120°C.

Die Polymerisation kann mit oder ohne Lösungsmittel durchgeführt werden. Der Begriff des Lösungsmittels ist hierbei weit zu verstehen.

Vorzugsweise wird die Polymerisation in einem unpolaren Lösungsmittel durchgeführt. Hierzu gehören Kohlenwasserstofflösungsmittel, wie beispielsweise aromatische Lösungsmittel, wie Toluol, Benzol und Xylol, gesättigte Kohlenwasserstoffe, wie beispielsweise Cyclohexan, Heptan, Octan, Nonan, Decan, Dodecan, die auch verzweigt vorliegen können. Diese Lösungsmittel können einzeln sowie als Mischung verwendet werden. Besonders bevorzugte Lösungsmittel sind Mineralöle, natürliche Öle und synthetische Öle sowie Mischungen hiervon. Von diesen sind Mineralöle ganz besonders bevorzugt.

Der Aufbau der erfindungsgemäßen Copolymere ist für viele Anwendungen und Eigenschaften nicht kritisch. Dementsprechend können die erfindungsgemäßen Copolymere statistische Copolymere darstellen.

Gemäß einem besonderen Aspekt der vorliegenden Erfindung können erfindungsgemäße Copolymere einen Gradienten aufweisen. Hierbei kann man die Monomerenzusammensetzung während des Kettenwachstums verändern, um Copolymere zu erhalten, die einen Gradient aufweisen.

Gemäß einem weiteren Aspekt der vorliegenden Erfindung können die erfindungsgemäßen Copolymere Blockcopolymere darstellen. Diese Polymere kann man beispielsweise dadurch erhalten, dass man die Monomerenzusammensetzung während des Kettenwachstums diskontinuierlich verändert. Bevorzugt weisen die von Esterverbindungen der Formeln (I), (II) und/oder (III) abgeleiteten Blöcke mindestens 30 Monomereinheiten auf.

Blockcopolymere bezeichnen Copolymere, die mindestens zwei Blöcke aufweisen. Blöcke sind hierbei Segmente des Copolymers, die eine konstante Zusammensetzung aus einem oder mehreren Monomerbausteinen aufweisen. Die einzelnen Blöcke können aus verschiedenen Monomeren aufgebaut sein. Des weiteren können sich die Blöcke auch nur durch die Konzentration an verschiedenen Monomerbausteinen unterscheiden, wobei innerhalb eines Blockes eine statistische Verteilung der verschiedenen Monomerbausteine vorliegen kann.

Gemäß einem interessanten Aspekt der vorliegenden Erfindung zeichnen sich die verschiedenen Blöcke durch einen Konzentrationsunterschied mindestens eines Monomerbausteins von 5% oder mehr, bevorzugt mindestens 10% und besonders bevorzugt mindestens 20% aus, ohne dass hierdurch eine Beschränkung erfolgen soll.

Der Terminus "Konzentration der Monomerbausteine" bezieht sich auf die Zahl an diesen Einheiten, die von den eingesetzten Monomeren abgeleitet sind, bezogen auf die Gesamtzahl an wiederkehrenden Einheiten innerhalb eines Blockes. Der Konzentrationsunterschied ergibt sich aus der Differenz zwischen den Konzentrationen mindestens eines Monomerbausteins zweier Blöcke.

Dem Fachmann ist die Polydispersität von Polymeren bewußt. Dementsprechend beziehen sich auch die Angaben bezüglich des Konzentrationsunterschiedes auf ein statisches Mittel über alle Polymerketten der entsprechenden Segmente.

Die Länge der Blöcke kann in weiten Bereichen variieren. Erfindungsgemäß können die Blöcke bevorzugt mindestens 30, vorzugsweise mindestens 50, besonders bevorzugt mindestens 100 und ganz besonders bevorzugt mindestens 150 Monomereinheiten aufweisen.

Neben Diblockcopolymeren sind auch Multiblockcopolymere, die mindestens drei, bevorzugt mindestens vier Blöcke aufweisen, Gegenstand der vorliegenden Erfindung. Diese Blockcopolymere können alternierende Blöcke aufweisen. Darüber hinaus können die Blockcopolymere auch als Kammpolymere oder als Sternpolymere vorliegen.

Bevorzugte Blockcopolymere können hydrophobe Segmente umfassen, die durch Polymerisation von Monomerenzusammensetzungen erhalten werden, die insbesondere (Meth)acrylate, Maleate und/oder Fumarate aufweisen können. Die hydrophoben Segmente sind insbesondere von ethylenisch ungesättigten Verbindungen der Formeln (I), (II) und/oder (III) abgeleitet. Des Weiteren umfassen diese bevorzugten Blockcopolymere polare Segmente, die Monomere gemäß Formel (IV) umfassen.

Besonders bevorzugte Blockcopolymere umfassen mindestens ein hydrophobes Segment P und mindestens ein polares Segment D, wobei das hydrophobe Segment durch Polymerisation von Monomerenzusammensetzungen erhalten werden kann, die
a) 0 bis 40 Gew.-%, insbesondere 0,5 bis 20 Gew.-%, bezogen auf das Gewicht der Monomerenzusammensetzungen zur Herstellung der hydrophoben Segmente, einer oder mehreren ethylenisch ungesättigten Esterverbindungen der Formel (I) 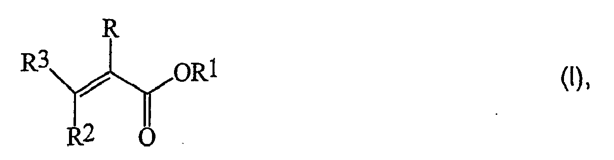 worin R Wasserstoff oder Methyl darstellt, R¹ einen linearen oder verzweigten Alkylrest mit 1 bis 5 Kohlenstoffatomen bedeutet, R² und R³ unabhängig Wasserstoff oder eine Gruppe der Formel -COOR' darstellen, worin R' Wasserstoff oder eine Alkylgruppe mit 1 bis 5 Kohlenstoffatomen bedeutet,
b) 10 bis 99,9 Gew.-%, insbesondere 55 bis 95 Gew.-%, bezogen auf das Gewicht der Monomerenzusammensetzungen zur Herstellung der hydrophoben Segmente, einer oder mehreren ethylenisch ungesättigten Esterverbindungen der Formel (II) 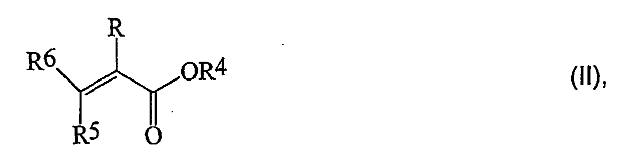 worin R Wasserstoff oder Methyl darstellt, R⁴ einen linearen oder verzweigten Alkylrest mit 6 bis 15 Kohlenstoffatomen bedeutet, R⁵ und R⁶ unabhängig Wasserstoff oder eine Gruppe der Formel -COOR" darstellen, worin R" Wasserstoff oder eine Alkylgruppe mit 6 bis 15 Kohlenstoffatomen bedeutet,
c) 0 bis 80 Gew.-%, insbesondere 0,5 bis 60 Gew.-%, bezogen auf das Gewicht der Monomerenzusammensetzungen zur Herstellung der hydrophoben Segmente, einer oder mehreren ethylenisch ungesättigten Esterverbindungen der Formel (III) 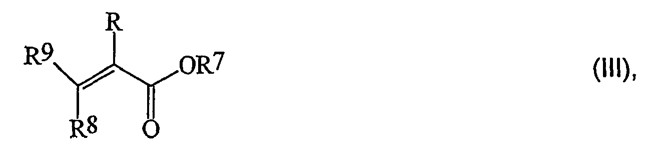 worin R Wasserstoff oder Methyl darstellt, R⁷ einen linearen oder verzweigten Alkylrest mit 16 bis 30 Kohlenstoffatomen bedeutet, R⁸ und R⁹ unabhängig Wasserstoff oder eine Gruppe der Formel -COOR'" darstellen, worin R"' Wasserstoff oder eine Alkylgruppe mit 16 bis 30 Kohlenstoffatomen bedeutet,
e) 0 bis 50 Gew.-%, bezogen auf das Gewicht der Monomerenzusammensetzungen zur Herstellung der hydrophoben Segmente, Comonomer
   umfasst,
   und wobei das polare Segment Einheiten umfasst, die von ethylenisch ungesättigten, polaren Esterverbindungen der Formel (IV) abgeleitet sind 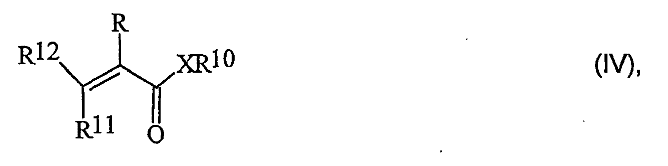 worin R Wasserstoff oder Methyl darstellt, X Sauerstoff, Schwefel oder eine Aminogruppe der Formel -NH- oder -NR^{a}-, worin R^{a} für einen Alkylrest mit 1 bis 40 Kohlenstoffatomen steht, R¹⁰ einen 2 bis 1000 Kohlenstoffatome umfassenden Rest mit mindestens 2 Heteroatomen, R¹¹ und R12 unabhängig Wasserstoff oder eine Gruppe der Formel -COX'R¹⁰' darstellen, worin X' Sauerstoff oder eine Aminogruppe der Formel -NH- oder -NR^{a'}-, worin R^{a'} für einen Alkylrest mit 1 bis 40 Kohlenstoffatomen steht, und R^{10'} einen 1 bis 100 Kohlenstoffatome umfassenden Rest darstellt, wobei mindestens ein polares Segment mindestens 3 von Monomeren der Formel (IV) abgeleiteten Einheiten umfasst, die unmittelbar aneinander gebunden sind.

Die polaren Segmente weisen bevorzugt einen hohen Anteil an polaren Einheiten auf, die von Monomeren gemäß Formel (IV) abgeleitet sind. Vorzugsweise umfasst mindestens ein polares Segment mindestens 50 Gew.-%, besonders bevorzugt mindestens 70 Gew.-% und besonders bevorzugt mindestens 80 Gew.-%, bezogen auf das Gewicht des polaren Segments, Einheiten, die von Monomeren gemäß Formel (IV) abgeleitet sind

Dementsprechend können bevorzugte Blockcopolymere aufweisend hydrophobe Segmente P und polare Segmente D durch die Formel

Pₘ-Dₙ (XV),

worin m und n unabhängig ganze Zahlen im Bereich von 1 bis 40, insbesondere 1 bis 5 und vorzugsweise 1 oder 2, bedeuten, dargestellt werden, ohne dass hierdurch eine Beschränkung erfolgen soll. Für m = 1 und n = 5 kann sich beispielsweise ein Kamm- oder ein Sternpolymer ergeben. Für m = 2 und n = 2 kann sich beispielsweise ein Sternpolymer oder ein Blockcopolymer mit alternierenden Blöcken P-D-P-D ergeben.

Die Länge der hydrophoben und polaren Segmente kann in weiten Bereichen variieren. Vorzugsweise weisen die hydrophoben Segmente P einen über das Gewicht gemittelten Polymerisationsgrad von mindestens 10, insbesondere mindestens 50 auf. Vorzugsweise liegt der über das Gewicht gemittelten Polymerisationsgrad der hydrophoben Segmente im Bereich von 20 bis 5000, insbesondere von 60 bis 2000.

Die Länge der polaren Segmente D kann bevorzugt mindestens 3, vorzugsweise mindestens 5 und besonders bevorzugt mindestens 10 Monomereinheiten betragen, wobei diese Monomereinheiten bevorzugt von Verbindungen gemäß Formel (IV) abgeleitet sind.

Vorzugsweise weisen die polaren Segment D einen über das Gewicht gemittelten Polymerisationsgrad im Bereich von 10 bis 1000 auf.

Gemäß einem besonderen Aspekt liegt Gewichtsverhältnis von den polaren Segmenten D zu den hydrophoben Segmenten P im Bereich von 1:1 bis 1:100, vorzugsweise 1:2 bis 1:30 liegt.

Gemäß einer bevorzugten Ausführungsform der vorliegenden Erfindung zeigen die Längen der hydrophoben Segmente zu den polaren Segmenten des Copolymeren ein Verhältnis im Bereich von 10 zu 1 bis 1 zu 10, vorzugsweise 5 zu 1 bis 1 zu 2 und besonders bevorzugt 3 zu 1 bis 1 zu 1, obwohl auch andere Längenverhältnisse der Blöcke zueinander von der vorliegenden Erfindung umfasst werden sollen.

Dem Fachmann ist die Polydispersität der Blockcopolymere sowie der jeweiligen Segmente bewusst. Die angegebenen Werte beziehen sich auf das Gewichtsmittel des jeweiligen Molekulargewichts.

Vorzugsweise kann das erfindungsgemäße Copolymer in einer Schmierölzusammensetzung eingesetzt werden. Eine Schmierölzusammensetzung umfasst mindestens ein Schmieröl.

Zu den Schmierölen gehören insbesondere Mineralöle, synthetische Öle und natürliche Öle.

Mineralöle sind an sich bekannt und kommerziell erhältlich. Sie werden im Allgemeinen aus Erdöl oder Rohöl durch Destillation und/oder Raffination und gegebenenfalls weitere Reinigungs- und Veredelungsverfahren gewonnen, wobei unter den Begriff Mineralöl insbesondere die höhersiedenden Anteile des Roh- oder Erdöls fallen. Im Allgemeinen liegt der Siedepunkt von Mineralöl höher als 200 °C, vorzugsweise höher als 300 °C, bei 5000 Pa. Die Herstellung durch Schwelen von Schieferöl, Verkoken von Steinkohle, Destillation unter Luftabschluß von Braunkohle sowie Hydrieren von Stein- oder Braunkohle ist ebenfalls möglich. Zu einem geringen Anteil werden Mineralöle auch aus Rohstoffen pflanzlichen (z. B. aus Jojoba, Raps) od. tierischen (z. B. Klauenöl) Ursprungs hergestellt. Dementsprechend weisen Mineralöle, je nach Herkunft unterschiedliche Anteile an aromatischen, cyclischen, verzweigten und linearen Kohlenwasserstoffen auf.

Im Allgemeinen unterscheidet man paraffinbasische, naphthenische und aromatische Anteile in Rohölen bzw. Mineralölen, wobei die Begriffe paraffinbasischer Anteil für längerkettig bzw. stark verzweigte iso-Alkane und naphtenischer Anteil für Cycloalkane stehen. Darüber hinaus weisen Mineralöle, je nach Herkunft und Veredelung unterschiedliche Anteile an n-Alkanen, iso-Alkanen mit einem geringen Verzweigungsgrad, sogenannte monomethylverzweigten Paraffine, und Verbindungen mit Heteroatomen, insbesondere O, N und/oder S auf, denen bedingt polare Eigenschaften zugesprochen werden. Die Zuordnung ist jedoch schwierig, da einzelne Alkanmoleküle sowohl langkettig verzweigte Gruppen als auch Cycloalkanreste und aromatische Anteile aufweisen können. Für die Zwecke der vorliegenden Erfindung kann die Zuordnung beispielsweise gemäß DIN 51 378 erfolgen. Polare Anteile können auch gemäß ASTM D 2007 bestimmt werden.

Der Anteil der n-Alkane beträgt in bevorzugten Mineralölen weniger als 3 Gew.-%, der Anteil der O, N und/oder S-haltigen Verbindungen weniger als 6 Gew.-%. Der Anteil der Aromaten und der monomethylverzweigten Paraffine liegt im Allgemeinen jeweils im Bereich von 0 bis 40 Gew.-%. Gemäß einem interssanten Aspekt umfaßt Mineralöl hauptsächlich naphtenische und paraffinbasische Alkane, die im allgemeinen mehr als 13, bevorzugt mehr als 18 und ganz besonders bevorzugt mehr als 20 Kohlenstoffatome aufweisen. Der Anteil dieser Verbindungen ist im allgemeinen ≥ 60 Gew.-%, vorzugsweise ≥ 80 Gew.-%, ohne dass hierdurch eine Beschränkung erfolgen soll. Ein bevorzugtes Mineralöl enthält 0,5 bis 30 Gew.-% aromatische Anteile, 15 bis 40 Gew.-% naphthenische Anteile, 35 bis 80 Gew.-% paraffinbasische Anteile, bis zu 3 Gew.-% n-Alkane und 0,05 bis 5 Gew.-% polare Verbindungen, jeweils bezogen auf das Gesamtgewicht des Mineralöls.

Eine Analyse von besonders bevorzugten Mineralölen, die mittels herkömmlicher Verfahren, wie Harnstofftrennung und
Flüssigkeitschromatographie an Kieselgel, erfolgte, zeigt beispielsweise folgende Bestandteile, wobei sich die Prozentangaben auf das Gesamtgewicht des jeweils eingesetzten Mineralöl beziehen:
n-Alkane mit ca. 18 bis 31 C-Atome:
   0,7 - 1,0 %,
gering verzweigte Alkane mit 18 bis 31 C-Atome:
   1,0 - 8,0 %,
Aromaten mit 14 bis 32 C-Atomen:
   0,4 - 10,7 %,
Iso- und Cyclo-Alkane mit 20 bis 32 C-Atomen:
   60,7- 82,4 %,
polare Verbindungen:
   0,1 - 0,8 %,
Verlust:
   6,9 - 19,4 %.

Wertvolle Hinweise hinsichtlich der Analyse von Mineralölen sowie eine Aufzählung von Mineralölen, die eine abweichende Zusammensetzung aufweisen, findet sich beispielsweise in Ullmanns Encyclopedia of Industrial Chemistry, 5th Edition on CD-ROM, 1997, Stichwort "lubricants and related products".

Synthetische Öle umfassen unter anderem organische Ester, beispielsweise Diester und Polyester, Polyalkylenglykole, Polyether, synthetische Kohlenwasserstoffe, insbesondere Polyolefine, von denen Polyalphaolefine (PAO) bevorzugt sind, Silikonöle und Perfluoralkylether. Sie sind meist etwas teurer als die mineralischen Öle, haben aber Vorteile hinsichtlich ihrer Leistungsfähigkeit.

Natürliche Öle sind tierische oder pflanzliche Öle, wie beispielsweise Klauenöle oder Jojobaöle.

Diese Schmieröle können auch als Mischungen eingesetzt werden und sind vielfach kommerziell erhältlich.

Die Konzentration des Polyalkylesters in der Schmierölzusammensetzung liegt vorzugsweise im Bereich von 2 bis 40 Gew.-%, besonders bevorzugt im Bereich von 4 bis 20 Gew.-%, bezogen auf das Gesamtgewicht der Zusammensetzung.

Neben den zuvor genannten Komponenten kann eine Schmierölzusammensetzung weitere Additive und Zusatzstoffe enthalten.

Zu diesen Additiven gehören unter anderem Antioxidantien, Korrosionsinhibitoren, Antischaummittel, Anti-Wear-Komponenten, Farbstoffe, Farbstabilisatoren, Detergentien, Stockpunkterniedriger und/oder DI-Additive. Bevorzugte Schmierölzusammensetzungen weisen eine gemäß ASTM D 445 bei 40°C gemessenen Viskosität im Bereich von 10 bis 120 mm²/s, besonders bevorzugt im Bereich von 22 bis 100 mm²/s auf.

Gemäß einem besonderen Aspekt der vorliegenden Erfindung weisen bevorzugte Schmierölzusammensetzung einen gemäß ASTM D 2270 bestimmten Viskositätsindex im Bereich von 120 bis 350, insbesondere von 140 bis 200 auf.

Die erfindungsgemäß eingesetzten Copolymere zeigen eine hervorragende dispergierende Wirkung. Diese Eigenschaft kann beispielsweise gemäß CEC L-48-A-00 ("oxidation stability of lubricating oils used in automotive transmissions by artificial ageing") gemessen werden. Hierbei wird der Grad der Oxidation durch den Viskositätsanstieg nachgewiesen. Je geringer ΔKV100 oder ΔKV40, desto besser die Oxidationsbeständigkeit bzw. die Dispergierfähigkeit des Polymeren. Des Weiteren können die Werte für die Heptan-unlöslichen Massenanteile genutzt werden, um Oxidationsbeständigkeit bzw. Dispergierfähigkeit zu beschreiben.

Darüber hinaus kann die dispergierende Wirkung der Copolymere gemäß JIS K2514 bestimmt werden. Hierbei werden die in Pentan-unlöslichen Bestandteilen gemessen, wobei sich die hervorragenden Eigenschaften der Copolymere sowohl nach JIS K2514 Methode A (ohne Zugabe von Flockungsmitteln) als auch nach JIS K2514 Methode B (nach Zugabe von Flockungsmitteln) messen lassen.

Zusätzlich kann am oxidierten Öl die Dispergierwirkung durch Bestimmung des Schmutztragevermögens auf einem Löschpapier in Form des Verhältnisses der Laufradien von Oxidationsrückstand und Grundöl bestimmt werden. Diese Tests sind in der Ölindustrie als sogenannte Tüpfeltests (Blotter Spot Tests) bekannt und verbreitet.

Bei den zuvor genannten Verfahren wird üblich ein Oxidationsschritt durchgeführt, um die Dispergierfähigkeit von Additiven zu untersuchen. Jedoch kann dieser Schritt durch Zugabe von Rußpartikeln ersetzt werden, um die dispergierende Wirkung ohne einen Einfluß der hervorragenden antioxidativen Eigenschaften der vorliegenden Copolymere zu untersuchen.

Bei diesen Methoden werden gezielt fertige Ruße, z.B. Schwarzruße wie das Printex 95 der Degussa AG (Hanau), zur Formulierung zugesetzt und kräftig eingerührt (z.B. mithilfe eines Hochgeschwindigkeitsrührers oder mithilfe von Stah(mahlkugeln in einer Schüttelmaschine) und die Dispergierwirkung in Form eines Viskositätsanstieges, eines Massenanteils an undispergiertem Ruß oder eines Laufradienverhältnisses (cf. EP 0 699 694) wie oben beschrieben zu evaluieren. Gleichermaßen können statt Rußen natürlich auch andere Sorten von Pigmenten, z.B organische Pigmente wie das Kupferphthalocyanin Heliogenblau L71 01 F der BASF AG (Ludwigshafen) oder anorganische Pigmente wie das Titandioxid Kronos 2310 der Kronos Titan GmbH (Leverkusen) genutzt werden, um Dispergierwirkung zu zeigen wie sie für andere Anwendungen, so z.B. in der Lackindustrie, erforderlich ist.

Auch mithilfe eines Toluol/Wasser-Testes kann die Grenzflächenaktivität der dispergierenden Polymere charakterisiert werden, d.h. deren Fähigkeit zur Stabilisierung von Wasser-in-Öl-Emulsionen bzw. allgemein die Fähigkeit zur Dispergierung polarer Substanzen in unpolarem organischen Medium. Dieser Test dient daher als Modell zur Dispergierung polarer Schlämme in Motoröl. Je langsamer die Emulsion auftrennt, desto höher sind Grenzfächenaktivität und Dispergierwirkung. Die Methode ist in EP 0 699 694 im Detail beschrieben.

Des Weiteren zeigen Schmierölzusammensetzungen, die Copolymere gemäß der vorliegenden Erfindung enthalten, eine besonders hohe Oxidationsbeständigkeit. Die Oxidationsbeständigkeit kann durch Veränderungen der Säurezahl oder der Carbonyl-Bande im Infrarot-Spektrum bestimmt werden.

Weiterhin können die Copolymere der vorliegenden Erfindung als Korrosionsschutz-Additiv dienen.

Das Korrosionsverhalten von Schmierölzusammensetzungen kann gemäß dem unter scharfen Bedingungen (150°C für 168h) ausgeführten Verfahren ZF 702047 der ZF Friedrichshafen AG ("Korrosionsverhalten gegenüber Kupfer") gemessen werden, wobei dieser Test einem Aufbau gemäß CEC L-48-A-00 bei 5 Liter Luftzufuhr pro Minute ausgeführt wird. In die Versuchsanordnung wird ein Kupferstab gemäß ISO 2160 eingebracht und nach Versuchsdurchführung gemäß DIN 51391-2 der Kupfergehalt im Öl bestimmt. Dieser sollte beispielsweise bei max. 50mg/kg (CVT-Öle) bzw. 150mg/kg (LKW-Öle) liegen entsprechend einem Massenverlust der Kupferprobe von ca. 1.5mg (CVT-Öl) bzw. 5mg (LKW-Öl). Die erfindungsgemäßen Copolymere ermöglichen das Einhalten dieser Norm bei sehr geringer Zugabe an Additiv in den Schmierölzusammensetzungen.

Weiterhin kann das Korrosionsverhalten gemäß dem in der Automobilindustrie verbreiteten Verfahren VW PV 1401 der Volkswagen AG ("Korrosionsschutz gegenüber Stahl") untersucht werden, wobei die Korrosion unter milderen Bedingungen (40°C für 48h) erfolgt. Die Oberflächenbegutachtung in mehreren Kategorien führt zu einer Klassifizierung in Korrosionsgraden, wobei Werte <= Grad 3 wünschenswert sind. Die erfindungsgemäßen Copolymere ermöglichen das Einhalten dieser Norm bei sehr geringer Zugabe an Additiv in den Schmierölzusammensetzungen.

Darüber hinaus zeigen die erfindungsgemäßen Copolymere eine hervorragende Wirkung als Metalldesaktivator.

Die Metalldesaktivator-Eigenschaft der erfindungsgemäßen Copolymere kann gemäß ASTM D130 bzw. ISO 2160 ("copper corrosion test"), gemäß ASTM D665 Verfahren A ("non-corrosion and non-rusting properties") und gemäß ASTM D1748 ("rust protection test") bestimmt werden.

Nachfolgend wird die Erfindung durch Beispiele eingehender erläutert.

### Beispiel 1

Herstellung eines dispergierenden Blockpolymeren mit Bernsteinsäure-mono-2-methacryloyloxyethylester:
In einem 2 L Vierhalskolben mit Säbelrührer, Rührmotor, N2-Einleitrohr, Kontaktthermometer und Pilzheizhaube wurden 1000,0 g LIMA (Methacrylsäureester des C12-C15 Alkoholgemisches Lial® 125), 250,0 g Butylacetat sowie 7,50 g Cumyldithiobenzoat vorgelegt und unter Rühren auf 85°C aufgeheizt. Nach der Inertisierung durch Einleiten von Stickstoff und der Zugabe von Trockeneis wurde die Polymerisation durch Zugabe von 2,0 g tert.-Butylperoxy-2-ethylhexanoat (tBPO) gestartet. Nach 2h wurden nochmals 2,0 g tBPO zugegeben Nach 6 h Reaktionszeit wurde die Temperatur auf 90°C angehoben, 92,9 g Bernsteinsäure-mono-2-methacryloyloxyethylester (Röhm GmbH & Co KG, Darmstadt) gelöst in 230 g Butylacetat sowie 1,0 g tBPO zugegeben und über Nacht bei 90°C gerührt. Am darauf folgenden Tag wurde mit 728,6 g KPE IOON-ÖI verdünnt und das Butylacetat am Rotationsverdampfer bei 120°C/12 mbar abgezogen. Man erhielt eine klare, viskose Lösung.

### Beispiel 2

Herstellung eines dispergierenden Blockpolymeren mit N-(2-Methacryloyloxyethyl)ethylenharnstoff:
In einem 2 L Vierhalskolben mit Säbelrührer, Rührmotor, N2-Einleitrohr, Kontaktthermometer und Pilzheizhaube wurden 900,0 g LIMA (Methacrylsäureester des C12-C15 Alkoholgemisches Lial® 125), 225,0 g Butylacetat sowie 6,75 g Cumyldithiobenzoat vorgelegt und unter Rühren auf 90°C aufgeheizt. Nach der Inertisierung durch Einleiten von Stickstoff und der Zugabe von Trockeneis wurde die Polymerisation durch Zugabe von 1,80 g tert.-Butylperoxy-2-ethylhexanoat (tBPO) gestartet. Nach 2 h und 4 h wurden jeweils 0,90 g tBPO zugegeben. Nach 6 h Reaktionszeit wurden 78,3 g N-(2-Methacryloyloxyethyl)ethylenharnstoff (erhältlich durch Abziehen des MMA aus einer 25%igen Lösung des N-(2-Methacryloyloxyethyl)ethylenharnstoff in MMA = Plex^{®} 6855-O der Röhm GmbH und Co. KG, Darmstadt) gelöst in 300 g Butylacetat sowie 1,0 g tBPO zugegeben und über Nacht bei 90°C gerührt. Am darauf folgenden Tag wurde mit 647,9 g KPE IOON-ÖI verdünnt und das Butylacetat am Rotationsverdampfer bei 120°C/12 mbar abgezogen. Man erhielt eine klare, viskose Lösung.

### Beispiel 3

Herstellung eines dispergierenden Blockpolymeren mit 2-Acetoacetoxyethylmethacrylat:
In einem 2 L Vierhalskolben mit Säbelrührer, Rührmotor, N2-Einleitrohr, Kontaktthermometer und Pilzheizhaube wurden 900,0 g LIMA (Methacrylsäureester des C12-C15 Alkoholgemisches Lial® 125), 225,0 g Butylacetat sowie 6,75 g Cumyldithiobenzoat vorgelegt und unter Rühren auf 85°C aufgeheizt. Nach der Inertisierung durch Einleiten von Stickstoff und der Zugabe von Trockeneis wurde die Polymerisation durch Zugabe von 1,80 g tert.-Butylperoxy-2-ethylhexanoat (tBPO) gestartet. Nach 2h wurden nochmals 0,90 g tBPO zugegeben. Nach 6 h Reaktionszeit wurden 78,3 g 2-Acetoacetoxyethylmethacrylat (Lonzamon AAEMA der Firma Lonza, Schweiz) gelöst in 300 g Butylacetat sowie 0,90 g tBPO zugegeben und über Nacht bei 85°C gerührt. Am darauf folgenden Tag wurde mit 652,2 g KPE 100N-ÖI verdünnt und das Butylacetat am Rotationsverdampfer bei 120°C/12 mbar abgezogen. Man erhielt eine klare, viskose Lösung.

### Vergleichsbeispiel 1

In einem 2 L Vierhalskolben mit Säbelrührer, Rührmotor, N2-Einleitrohr, Kontaktthermometer und Pilzheizhaube wurden 608,0 g LIMA (Methacrylsäureester des C12-C15 Alkoholgemisches Lial® 125) zusammen mit 2,90 g Cumyldithiobenzoat, 1,22 g tBPO (tert-Butylperoctoat) und 160 g Mineralöl im Reaktionskolben vorgelegt und durch Trockeneiszugabe und Überleiten von Stickstoff inertisiert. Anschließend wurde die Mischung unter Rühren auf 85°C erwärmt.

Nach einer Reaktionszeit von ca. 5 Stunden wurden 32,0 g
Hydroxyethylmethacrylat zugegeben. Nach 2,5 Stunden wurden 0,64 g tBPO zugegeben und die Reaktionsmischung über Nacht bei 85°C gerührt. Man erhält eine klare, viskose Lösung des Polymeren in Öl.

### Vergleichsbeispiel 2

In einem 2 L Vierhalskolben mit Säbelrührer, Rührmotor, N2-Einleitrohr, Kontaktthermometer und Pilzheizhaube wurden 608,0 g LIMA (Methacrylsäureester des C12-C15 Alkoholgemisches Lial® 125) zusammen mit 2,90 g Cumyldithiobenzoat, 1,22 g tBPO (tert-Butylperoctoat) und 160 g Mineralöl im Reaktionskolben vorgelegt und durch Trockeneiszugabe und Überleiten von Stickstoff inertisiert. Anschließend wurde die Mischung unter Rühren auf 85°C erwärmt.

Nach einer Reaktionszeit von ca. 5 Stunden wurden 32,0 g Dimethylaminoethylmethacrylat zugegeben. Nach 2,5 Stunden wurden 0,64 g tBPO zugegeben und die Reaktionsmischung über Nacht bei 85°C gerührt. Man erhält eine klare, viskose Lösung des Polymeren in Öl.

### Beispiele 4 bis 5 und Vergleichsbeispiele 3 und 4

Die Eigenschaften der erhaltenen Copolymere wurden mit einem Grundöl gemischt. Die Mischungen wurden anschließend in einem Reibexperiment untersucht.

Die Reibexperimente wurden an einer Mini Traction Machine (PCS Instruments) unter folgenden Bedingungen durchgeführt:

**Tab. 4: Messparameter und Bedingungen für die MTM-Reibteste**

| Test Rig | PCS MTM 3 |
|---|---|
| Scheibe | Stahl, AISI 52100, Durchmesser = 40.0 mm |
| | RMS = 25 - 30 nm, Rockwell C Härte = 63 |
| | Elastischer Modul = 207 GPa |
| Ball | Stahl, AISI 52100, Durchmesser = 19.0 mm |
| | RMS = 10 -13 nm, Rockwell C Härte = 58 - 65 |
| | Elastischer Modul = 207 GPa |
| Geschwindigkeit | 0.005 m/s - 2.5 m/s |
| Temperatur | 120°C |
| Gleit-/Rollverhältnis | 50% |
| Last | 30 N = 0.93 GPa max. Hertz'scher Anpressdruck |

Als Ergebnis eines Reibexperiments wurden eine Stribeck-Kurven erhalten, aus der die Reibungskoeffizienten bei 10 mm/s ermittelt wurden.

| | Copolymer | Reibungskoeffizient 10 mm/s |
|---|---|---|
| Beispiel 4 | Blockcopolymer mit Bernsteinsäure-mono-2-methacryloyloxyethylester | 0,026 |
| | erhalten gemäß Beispiel 1 | |
| Beispiel 5 | Blockpolymer mit N-(2-Methacryloyloxyethyl)ethylenharnstoff | 0,022 |
| | erhalten gemäß Beispiel 2 | |
| Vergleichsbeispiel 3 | Blockcopolymer mit Hydroxyethylmethacrylat | 0,033 |
| | erhalten gemäß Vergleichsbeispiel 1 | |
| Vergleichsbeispiel 4 | Blockpolymer mit Dimethylaminoethylmethacrylat | 0,043 |
| | erhalten gemäß Vergleichsbeispiel 2 | |

### Vergleichsbeispiel 5:

In einem 2-Liter-Vierhalskolben ausgestattet mit Säbelrührer, Rührmotor, N₂-Einleitrohr, Kontaktthermometer, Pilzheizhaube und Rückflusskühler werden 430g 150N-ÖI und 47.8g einer Monomermischung aus C12-C18-Alkylmethacrylaten und Methylmethacrylat im Gewichtsverhältnis 99:1 vorgelegt. Nach Inertisierung durch Einleiten von N₂ und der Zugabe von Trockeneis wird die Temperatur auf 100°C eingestellt. Danach werden 0.71 g *tert*-Butylperoctoat zugegeben und gleichzeitig ein Monomerzulauf - bestehend aus 522.2g einer Monomermischung aus C12-C18-Alkylmethacrylaten und Methylmethacrylat im Gewichtsverhältnis 99:1 sowie 3.92g *tert*-Butylperoctoat - gestartet. Die Zulaufzeit beträgt 3.5h bei gleichmäßiger Zulaufgeschwindigkeit. 2h nach Zulaufende werden nochmals 1.14g *tert*-Butylperoctoat zugegeben.
Nach Aufheizen auf 130°C werden 13.16g 150N-Öl, 17.45g N-Vinylpyrrolidon und 1.46g *tert*-Butylperbenzoat hinzugefügt. Jeweils 1 h, 2h und 3h danach werden nochmals je 0.73g *tert*-Butylperbenzoat zugegeben. Siehe auch DE 1 520 696 der Röhm & Haas GmbH.

### Gelpermeationschromatographie (GPC):

Die massengemittelten Molekulargewichte M_{w} sowie der Polydispersitätsindex PDI der Polymeren wurden per GPC bestimmt. Die Messungen erfolgten in Tetrahydrofuran bei 35°C gegen eine Polymethylmethacrylat-Eichkurve aus einem Satz von ≥25 Standards (Polymer Standards Service bzw. Polymer Laboratories), deren Mₚₑₐₖ logarithmisch gleichmäßig über den Bereich von 5·10⁶ bis 2·10² g/mol verteilt lag. Es wurde eine Kombination aus sechs Säulen (Polymer Standards Service SDV 100Å / 2x SDV LXL / 2x SDV 100Å / Shodex KF-800D) verwendet. Zur Signalaufnahme wurde ein RI-Detektor (Agilent 1100 Series) eingesetzt.

| | Mw [g/mol] | PDI |
|---|---|---|
| Beispiel 1 (60% Polymergehalt) | 69.000 | 1.2 |
| Beispiel 2 (60% Polymergehalt) | 76.600 | 1.4 |
| Beispiel 3 (60% Polymergehalt) | 165.000 | 2.2 |
| Vergleichsbeispiel 1 (80% Polymergehalt) | 68000 | 2.1 |
| Vergleichsbeispiel 2 (80% Polymergehalt) | 72000 | 2.2 |
| Vergleichsbeispiel 5 (75% Polymergehalt) | 98000 | 3.4 |

### Dispergierwirkung und Oxidationsstabilität

Die Überprüfung von Dispergierwirkung und Oxidationsstabilität (CEC L-48-A-00, Methode B, 160 °C, 192 h) der erfindungsgemäßen Beispiele 1-3 Vergleich zu Vergleichsbeispiel 5 erfolgte in SAE 15W40 Motorölformulierungen (kinematische Viskosität bei 100°C nach ASTM D445: KV100=12.5-16.3mm²/s; dynamische Viskosität bei -20°C im *cold cranking simulator* nach ASTM D5293: CCS-Viskosität<7000mPas) als dispergierende Viskositätsindexverbesserer-Komponente II. Die Formulierung bestand aus
- 5.2% Gew.-% Chevron-Oronite Paratone 8002 (nicht dispergierende Viskositätsindexverbesserer-Komponente I vom OCP-Typ),
- dispergierende Viskositätsindexverbesserer-Komponente II (2.12% Gew.-% Polymergehalt bezogen auf Formulierung),
- 0.19% Gew.% Viscoplex 1-211 (Stockpunktverbesserer),
- 13.8% Gew.-% Chevron-Oronite Oloa 4594 CA (Additivpaket) und
- 12% Gew.-% 600N-ÖI,
- aufgefüllt mit 150N-ÖI auf 100 Gew.-%.
Hierbei wird der Grad der Oxidation durch den Viskositätsanstieg nachgewiesen. Je geringer die Werte für ΔKV40ᵣₑₗ oder ΔKV100ᵣₑₗ sind, desto besser ist die Oxidationsbeständigkeit bzw. die Dispergierfähigkeit des Polymeren. Die erhaltenen Ergebnisse sind in folgender
Tabelle zusammengestellt. Es zeigt sich, dass die erfindungsgemäßen Polymere gemäß Beispiel 1-3 signifikante Vorteile bezüglich Oxidationsbeständigkeit und Dispergierfähigkeit gegenüber dem Vergleichsbeispiel 5 aufweisen.

| dispergierende Viskositätsindex-verbesserer- Komponente II | KV40 [mm²/s] | KV100 [mm²/s] | CCS-Viskosität bei -20°C [mPas] | ΔKV40ᵣₑₗ [%] | ΔKV100ᵣₑₗ [%] |
|---|---|---|---|---|---|
| 3.54% Beispiel 1 | 100.1 | 14.11 | 6405 | 10.0 | 4.5 |
| 3.54% Beispiel 2 | 104.0 | 14.71 | 6445 | 8.0 | 3.0 |
| 3.54% Beispiel 3 | 111.6 | 15.78 | 6490 | 4.9 (Wieder-holung: 5.7) | 0.0 (Wieder-holung: 0.0) |
| 3.72% Vergleichsbeispiel 5 | 104.2 | 14.57 | 6636 | 13.0 | 8.4 |

## Patentansprüche

1. Schmierölzusammensetzung umfassend mindestens ein Copolymer erhältlich durch Polymerisation mindestens einer Monomerzusammensetzung, die aus
a) 0 bis 40 Gew.-% mindestens einer ethylenisch ungesättigten
Esterverbindung der Formel (I) 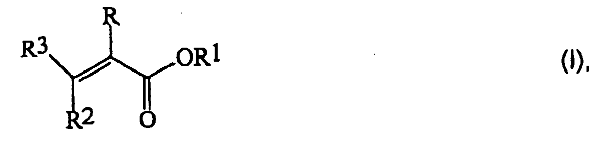 worin R Wasserstoff oder Methyl darstellt, R¹ einen linearen oder verzweigten Alkylrest mit 1 bis 5 Kohlenstoffatomen bedeutet, R² und R³ unabhängig Wasserstoff oder eine Gruppe der Formel -COOR' darstellen, worin R' Wasserstoff oder eine Alkylgruppe mit 1 bis 5 Kohlenstoffatomen bedeutet,
b) 10 bis 99,9 Gew.-% mindestens einer ethylenisch ungesättigten Esterverbindung der Formel (II) 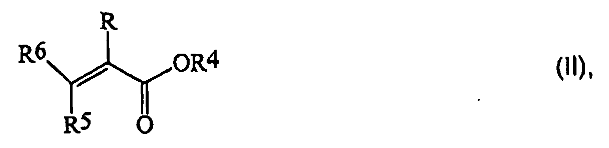 worin R Wasserstoff oder Methyl darstellt, R⁴ einen linearen oder
verzweigten Alkylrest mit 6 bis 15 Kohlenstoffatomen bedeutet, R⁵ und R⁶ unabhängig Wasserstoff oder eine Gruppe der Formel -COOR" darstellen, worin R" Wasserstoff oder eine Alkylgruppe mit 6 bis 15
Kohlenstoffatomen bedeutet,
c) 0 bis 80 Gew.-% mindestens einer ethylenisch ungesättigten
Esterverbindung der Formel (III) 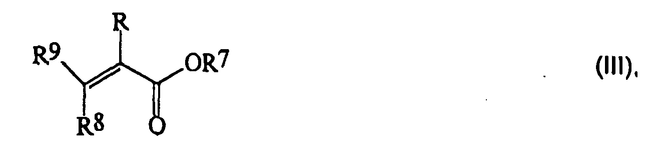 worin R Wasserstoff oder Methyl darstellt, R⁷ einen linearen oder verzweigten Alkylrest mit 16 bis 30 Kohlenstoffatomen bedeutet, R⁸ und R⁹ unabhängig Wasserstoff oder eine Gruppe der Formel -COOR"' darstellen, worin R'" Wasserstoff oder eine Alkylgruppe mit 16 bis 30 Kohlenstoffatomen bedeutet,
d) 0,1 bis 30 Gew.-% mindestens einer ethylenisch ungesättigten, polaren
Esterverbindung der Formel (IV) 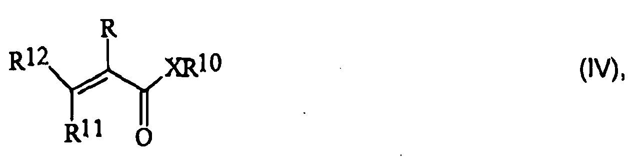 worin R Wasserstoff oder Methyl darstellt, X Sauerstoff, Schwefel oder eine Aminogruppe der Formel -NH- oder -NR^{a}-, worin R^{a} für einen Alkylrest mit 1 bis 40 Kohlenstoffatomen steht, R¹⁰ einen 2 bis 1000 Kohlenstoffatome umfassenden Rest mit mindestens 2 Heteroatomen, R¹¹ und R¹² unabhängig Wasserstoff oder eine Gruppe der Formel -COX'R¹⁰' darstellen, worin X' Sauerstoff oder eine Aminogruppe der Formel -NH- oder-NR^{a'}-, worin R^{a'} für einen Alkylrest mit 1 bis 40 Kohlenstoffatomen steht, und R¹⁰' einen 1 bis 100 Kohlenstoffatome umfassenden Rest darstellt,
e) 0 bis 50 Gew.-% Comonomer;
jeweils bezogen auf das Gesamtgewicht der ethylenisch ungesättigten Monomere, besteht,
wobei der Rest R¹⁰ in mindestens einer der Esterverbindungen gemäß Formel (IV) mindestens eine Gruppe der Formel -CO- umfasst.

2. Schmierölzusammensetzung umfassend mindestens ein Copolymer gemäß Anspruch 1, **dadurch gekennzeichnet, dass** das Copolymer eine in Chloroform bei 25°C gemessene spezifische Viskosität η_{sp/c} im Bereich von 8 bis 74 ml/g aufweist.

3. Schmierölzusammensetzung umfassend mindestens ein Copolymer gemäß Anspruch 1 oder 2, **dadurch gekennzeichnet, dass** man die Monomerzusammensetzung während der Herstellung der Copolymere verändert, so dass man Blockcopolymere erhält.

4. Schmierölzusammensetzung umfassend mindestens ein Copolymer gemäß mindestens einem der vorhergehenden Ansprüche, **dadurch gekennzeichnet, dass** der Rest R¹⁰ in den Esterverbindungen der Formel (IV) mindestens 2 unterschiedliche Heteroatome aufweist.

5. Schmierölzusammensetzung umfassend mindestens ein Copolymer gemäß Anspruch 4, **dadurch gekennzeichnet, dass** der Rest R¹⁰ in mindestens einer der Esterverbindungen der Formel (IV) mindestens ein Stickstoffatom und mindestens ein Sauerstoffatom umfasst.

6. Schmierölzusammensetzung umfassend mindestens ein Copolymer gemäß mindestens einem der vorhergehenden Ansprüche, **dadurch gekennzeichnet, dass** mindestens ein Heteroatom im Rest R¹⁰ in mindestens einer der Esterverbindungen der Formel (IV) über mindestens 4 Atome von der Gruppe X getrennt ist.

7. Schmierölzusammensetzung umfassend mindestens ein Copolymer gemäß mindestens einem der vorhergehenden Ansprüche, **dadurch gekennzeichnet, dass** der Rest R¹⁰ in mindestens einer der Esterverbindungen gemäß Formel (IV) mindestens 2 Gruppen der Formel -CO- umfasst.

8. Schmierölzusammensetzung umfassend mindestens ein Copolymer gemäß Anspruch 7, **dadurch gekennzeichnet, dass** die mindestens zwei Gruppen der Formel -CO- über höchstens 4 Atome miteinander verbunden sind, bezogen auf das C-Atom der CO-Gruppe.

9. Schmierölzusammensetzung umfassend mindestens ein Copolymer gemäß Anspruch 8, **dadurch gekennzeichnet, dass** der Rest R¹⁰ in mindestens einer Esterverbindung der Formel (IV) eine Gruppe der Formel (IX) darstellt

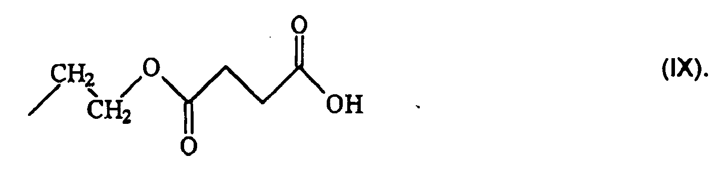

10. Schmierölzusammensetzung umfassend mindestens ein Copolymer gemäß Anspruch 9, **dadurch gekennzeichnet, dass** die Komponente d) mindestens eine Esterverbindung gemäß Formel (X) umfasst

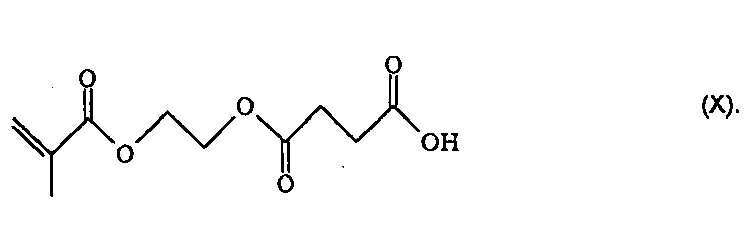

11. Schmierölzusammensetzung umfassend mindestens ein Copolymer gemäß Anspruch 8, **dadurch gekennzeichnet, dass** der Rest R¹⁰ in mindestens einer Esterverbindung der Formel (IV) eine Gruppe der Formel (XI) darstellt

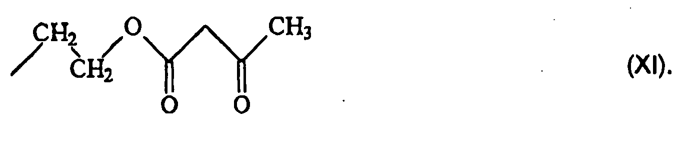

12. Schmierölzusammensetzung umfassend mindestens ein Copolymer gemäß Anspruch 11, **dadurch gekennzeichnet, dass** die Komponente d) mindestens eine Esterverbindung gemäß Formel (XII) umfasst

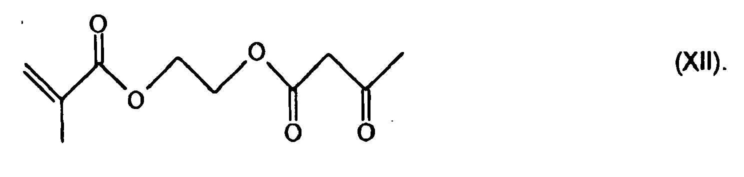

13. Schmierölzusammensetzung umfassend mindestens ein Copolymer gemäß einem der Ansprüche 1 bis 8, **dadurch gekennzeichnet, dass** der Rest R¹⁰ in mindestens einer der Esterverbindungen gemäß Formel (IV) mindestens eine Gruppe der Formel -CO- und mindestens ein Stickstoffatom umfasst.

14. Schmierölzusammensetzung umfassend mindestens ein Copolymer gemäß Anspruch 13, **dadurch gekennzeichnet, dass** der Rest R¹⁰ in mindestens einer der Esterverbindungen gemäß Formel (IV) mindestens eine Harnstoffgruppe umfasst.

15. Schmierölzusammensetzung umfassend mindestens ein Copolymer gemäß Anspruch 14, **dadurch gekennzeichnet, dass** der Rest R¹⁰ in mindestens einer Esterverbindung der Formel (IV) eine Gruppe der Formel (XIII) darstellt 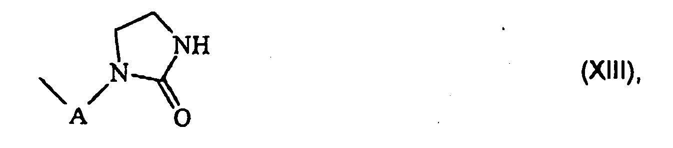 worin A eine verbindende Gruppe mit 1 bis 500 Kohlenstoffatomen bedeutet.

16. Schmierölzusammensetzung umfassend mindestens ein Copolymer gemäß Anspruch 15, **dadurch gekennzeichnet, dass** die Komponente d) mindestens eine Esterverbindung gemäß Formel (XIV) umfasst

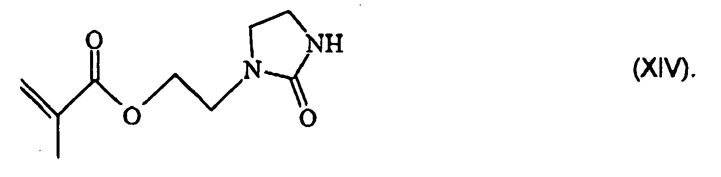

17. Schmierölzusammensetzung umfassend mindestens ein Copolymer gemäß mindestens einem der vorhergehenden Ansprüchen, **dadurch gekennzeichnet, dass** das Copolymer eine Polydispersität M_{w}/Mₙ im Bereich von 1,05 bis 4,0 aufweist.

18. Schmierölzusammensetzung umfassend mindestens ein Copolymer gemäß mindestens einem der vorhergehenden Ansprüchen, **dadurch gekennzeichnet, dass** das Copolymer ein Blockcopolymer ist, wobei das Blockcopolymer mindestens ein hydrophobes Segment P und mindestens ein polares Segment D umfasst, wobei das hydrophobe Segment durch Polymerisation von Monomerenzusammensetzungen erhalten werden kann, die
a) 0 bis 40 Gew.-%, bezogen auf das Gewicht der Monomerenzusammensetzungen zur Herstellung der hydrophoben Segmente, einer oder mehreren ethylenisch ungesättigten Esterverbindungen der Formel (I) 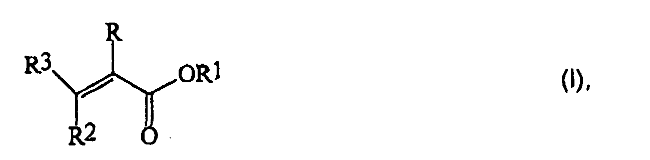 worin R Wasserstoff oder Methyl darstellt, R¹ einen linearen oder verzweigten Alkylrest mit 1 bis 5 Kohlenstoffatomen bedeutet, R² und R³ unabhängig Wasserstoff oder eine Gruppe der Formel -COOR' darstellen, worin R' Wasserstoff oder eine Alkylgruppe mit 1 bis 5 Kohlenstoffatomen bedeutet,
b) 10 bis 99,9 Gew.%, bezogen auf das Gewicht der Monomerenzusammensetzungen zur Herstellung der hydrophoben Segmente, einer oder mehreren ethylenisch ungesättigten Esterverbindungen der Formel (II) 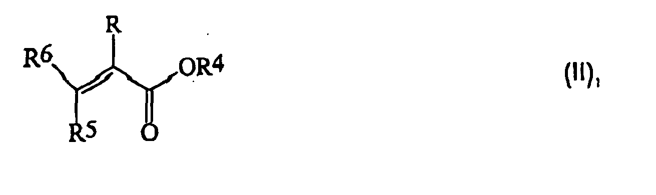 worin R Wasserstoff oder Methyl darstellt, R⁴ einen linearen oder verzweigten Alkylrest mit 6 bis 15 Kohlenstoffatomen bedeutet, R⁵ und R⁶ unabhängig Wasserstoff oder eine Gruppe der Formel -COOR" darstellen, worin R" Wasserstoff oder eine Alkylgruppe mit 6 bis 15 Kohlenstoffatomen bedeutet,
c) 0 bis 80 Gew.-%, bezogen auf das Gewicht der Monomerenzusammensetzungen zur Herstellung der hydrophoben Segmente, einer oder mehreren ethylenisch ungesättigten Esterverbindungen der Formel (III) 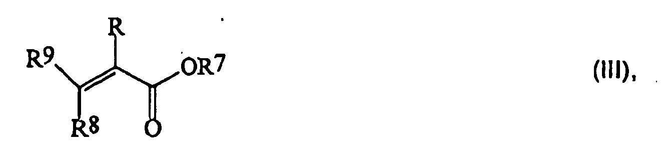 worin R Wasserstoff oder Methyl darstellt, R⁷ einen linearen oder verzweigten Alkylrest mit 16 bis 30 Kohlenstoffatomen bedeutet, R⁸ und R⁹ unabhängig Wasserstoff oder eine Gruppe der Formel -COOR'" darstellen, worin R'" Wasserstoff oder eine Alkylgruppe mit 16 bis 30 Kohlenstoffatomen bedeutet,
e) 0 bis 50 Gew.-%, bezogen auf das Gewicht der Monomerenzusammensetzungen zur Herstellung der hydrophoben Segmente, Comonomer
umfasst,
und wobei das polare Segment Einheiten umfasst, die von ethylenisch ungesättigten, polaren Esterverbindungen der Formel (IV) abgeleitet sind 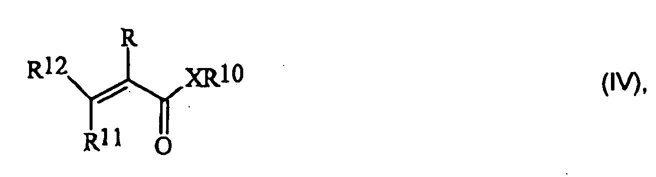 worin R Wasserstoff oder Methyl darstellt, X Sauerstoff, Schwefel oder eine Aminogruppe der Formel -NH- oder-NR^{a}-, worin R^{a} für einen Alkylrest mit 1 bis 40 Kohlenstoffatomen steht, R¹⁰ einen 2 bis 1000 Kohlenstoffatome umfassenden Rest mit mindestens 2 Heteroatomen, R¹¹ und R12 unabhängig Wasserstoff oder eine Gruppe der Formel -COX'R¹⁰' darstellen, worin X' Sauerstoff oder eine Aminogruppe der Formel -NH- oder -NR^{a'}-, worin R^{a'} für einen Alkylrest mit 1 bis 40 Kohlenstoffatomen steht, und R¹⁰', einen 1 bis 100 Kohlenstoffatome umfassenden Rest darstellt, **dadurch gekennzeichnet, dass** mindestens ein polares Segment mindestens 3 von Monomeren der Formel (IV) abgeleiteten Einheiten umfasst, die unmittelbar aneinander gebunden sind.

19. Schmierölzusammensetzung umfassend mindestens ein Copolymer gemäß Anspruch 18, **dadurch gekennzeichnet, dass** das hydrophobe Segment P einen über das Gewicht gemittelten Polymerisationsgrad im Bereich von 20 bis 5000 aufweist.

20. Schmierölzusammensetzung umfassend mindestens ein Copolymer gemäß Anspruch 18 oder 19, **dadurch gekennzeichnet, dass** das polare Segment D einen über das Gewicht gemittelten Polymerisationsgrad im Bereich von 3 bis 1000 aufweist.

21. Schmierölzusammensetzung umfassend mindestens ein Copolymer gemäß mindestens einem der Ansprüche 18 bis 20, **dadurch gekennzeichnet, dass** mindestens ein polares Segment mindestens 50 Gew.-%, bezogen auf das Gewicht des polaren Segments, Einheiten umfasst, die von Monomeren gemäß Formel (IV) abgeleitet sind.

22. Schmierölzusammensetzung umfassend mindestens ein Copolymer gemäß mindestens einem der Ansprüche 18 bis 21, **dadurch gekennzeichnet, dass** das Gewichtsverhältnis der hydrophoben Segmente zu den polaren Segmenten im Bereich von 100:1 bis 1:1 liegt.

23. Schmierölzusammensetzung gemäß mindestens einem der vorstehenden Ansprüche, **dadurch gekennzeichnet, dass** die Schmierölzusammensetzung mindestens ein Mineralöl und/oder ein synthetisches Öl umfasst.

## Claims

1. Lubricant oil composition comprising at least one copolymer obtainable by polymerizing at least one monomer composition which consists of
a) from 0 to 40% by weight of at least one ethylenically unsaturated ester compound of the formula (I) 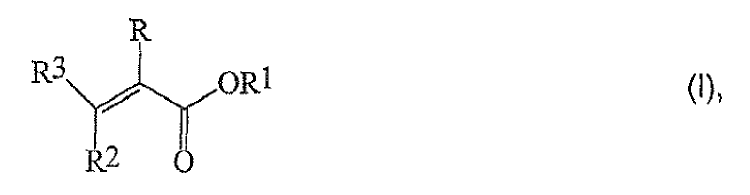 in which R is hydrogen or methyl, R¹ is a linear or branched alkyl radical having from 1 to 5 carbon atoms, R² and R³ are each independently hydrogen or a group of the formula -COOR' in which R' is hydrogen or an alkyl group having from 1 to 5 carbon atoms,
b) from 10 to 99.9% by weight of at least one ethylenically unsaturated ester compound of the formula (II) 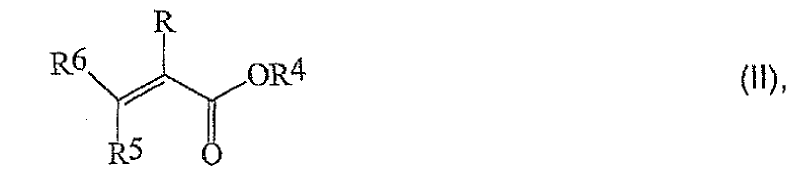 in which R is hydrogen or methyl, R⁴ is a linear or branched alkyl radical having from 6 to 15 carbon atoms, R⁵ and R⁶ are each independently hydrogen or a group of the formula -COOR" in which R" is hydrogen or an alkyl group having from 6 to 15 carbon atoms,
c) from 0 to 80% by weight of at least one ethylenically unsaturated ester compound of the formula (III) 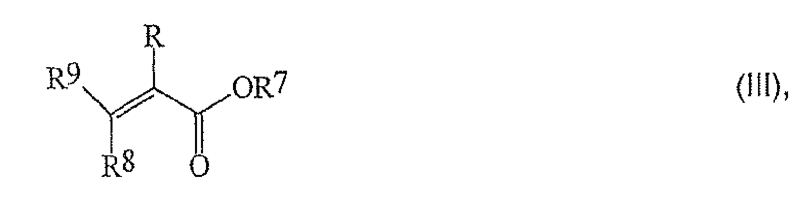 in which R is hydrogen or methyl, R⁷ is a linear or branched alkyl radical having from 16 to 30 carbon atoms, R⁸ and R⁹ are each independently hydrogen or a group of the formula -COOR''' in which R''' is hydrogen or an alkyl group having from 16 to 30 carbon atoms,
d) from 0.1 to 30% by weight of at least one ethylenically unsaturated, polar ester compound of the formula (IV) 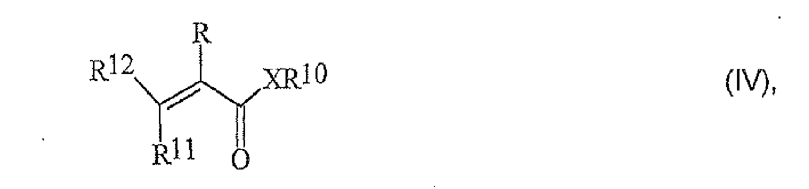 in which R is hydrogen or methyl, X is oxygen, sulfur or an amino group of the formula -NH- or -NR^{a}- in which R^{a} is an alkyl radical having from 1 to 40 carbon atoms, R¹⁰ is a radical which comprises from 2 to 1000 carbon atoms and has at least 2 heteroatoms, R¹¹ and R¹² are each independently hydrogen or a group of the formula -COX'R¹⁰' in which X' is oxygen or an amino group of the formula -NH- or -NR^{a'}- in which R^{a'} is an alkyl radical having from 1 to 40 carbon atoms, and R¹⁰' is a radical comprising from 1 to 100 carbon atoms,
e) from 0 to 50% by weight of comonomer,
based in each case on the total weight of the ethylenically unsaturated monomers,
where the R¹⁰ radical in at least one of the ester compounds of the formula (IV) comprises at least one group of the formula -CO-.

2. Lubricant oil composition comprising at least one copolymer according to Claim 1, **characterized in that** the copolymer has a specific viscosity η_{sp/c}, measured in chloroform at 25°C, in the range from 8 to 74 ml/g.

3. Lubricant oil composition comprising at least one copolymer according to Claim 1 or 2, **characterized in that** the monomer composition is altered during the preparation of the copolymers, such that block copolymers are obtained.

4. Lubricant oil composition comprising at least one copolymer according to at least one of the preceding claims, **characterized in that** the R¹⁰ radical in the ester compounds of the formula (IV) has at least 2 different heteroatoms.

5. Lubricant oil composition comprising at least one copolymer according to Claim 4, **characterized in that** the R¹⁰ radical in at least one of the ester compounds of the formula (IV) comprises at least one nitrogen atom and at least one oxygen atom.

6. Lubricant oil composition comprising at least one copolymer according to at least one of the preceding claims, **characterized in that** at least one heteroatom in the R¹⁰ radical in at least one of the ester compounds of the formula (IV) is separated from the X group by at least 4 atoms.

7. Lubricant oil composition comprising at least one copolymer according to at least one of the preceding claims, **characterized in that** the R¹⁰ radical in at least one of the ester compounds of the formula (IV) comprises at least 2 groups of the formula -CO-.

8. Lubricant oil composition comprising at least one copolymer according to Claim 7, **characterized in that** the at least two groups of the formula -CO- are bonded to one another via at most 4 atoms, based on the carbon atom of the CO group.

9. Lubricant oil composition comprising at least one copolymer according to Claim 8, **characterized in that** the R¹⁰ radical in at least one ester compound of the formula (IV) is a group of the formula (IX)

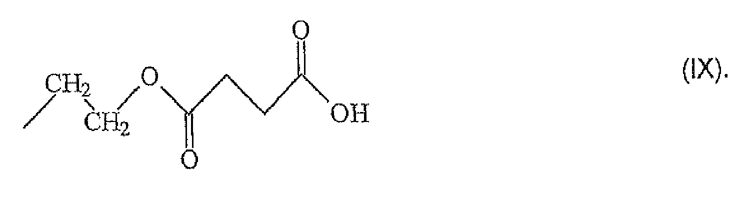

10. Lubricant oil composition comprising at least one copolymer according to Claim 9, **characterized in that** component d) comprises at least one ester compound of the formula (X)

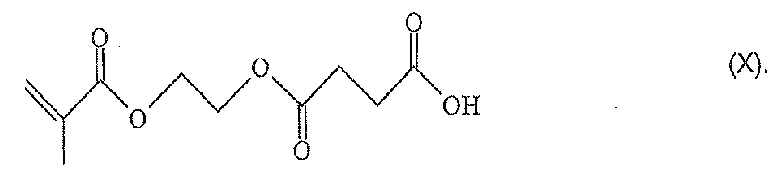

11. Lubricant oil composition comprising at least one copolymer according to Claim 8, **characterized in that** the R¹⁰ radical in at least one ester compound of the formula (IV) is a group of the formula (XI)

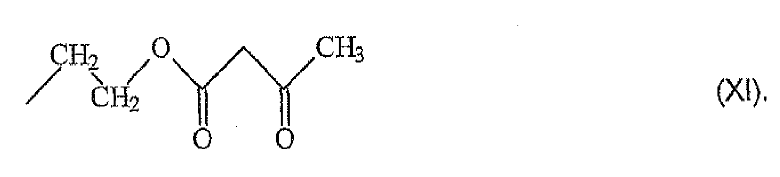

12. Lubricant oil composition comprising at least one copolymer according to Claim 11, **characterized in that** component d) comprises at least one ester compound of the formula (XII)

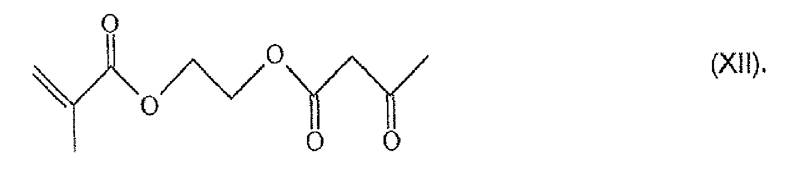

13. Lubricant oil composition comprising at least one copolymer according to one of Claims 1 to 8, **characterized in that** the R¹⁰ radical in at least one of the ester compounds of the formula (IV) comprises at least one group of the formula -CO- and at least one nitrogen atom.

14. Lubricant oil composition comprising at least one copolymer according to Claim 13, **characterized in that** the R¹⁰ radical in at least one of the ester compounds of the formula (IV) comprises at least one urea group.

15. Lubricant oil composition comprising at least one copolymer according to Claim 14, **characterized in that** the R¹⁰ radical in at least one ester compound of the formula (IV) is a group of the formula (XIII) 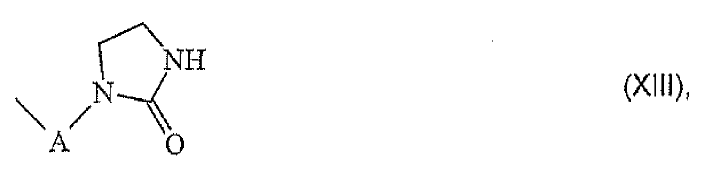 in which A is a connecting group having from 1 to 500 carbon atoms.

16. Lubricant oil composition comprising at least one copolymer according to Claim 15, **characterized in that** component d) comprises at least one ester compound of the formula (XIV)

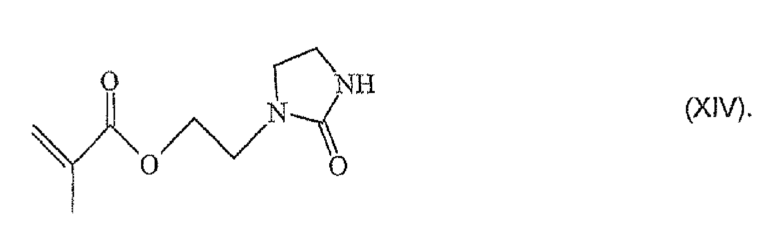

17. Lubricant oil composition comprising at least one copolymer according to at least one of the preceding claims, **characterized in that** the copolymer has a polydispersity M_{w}/Mₙ in the range from 1.05 to 4.0.

18. Lubricant oil composition comprising at least one copolymer according to at least one of the preceding claims, **characterized in that** the copolymer is a block copolymer, the block copolymer comprising at least one hydrophobic segment P and at least one polar segment D, the hydrophobic segment being obtained by polymerizing monomer compositions which comprise
a) from 0 to 40% by weight, based on the weight of the monomer compositions for preparing the hydrophobic segments, of at least one ethylenically unsaturated ester compound of the formula (I) 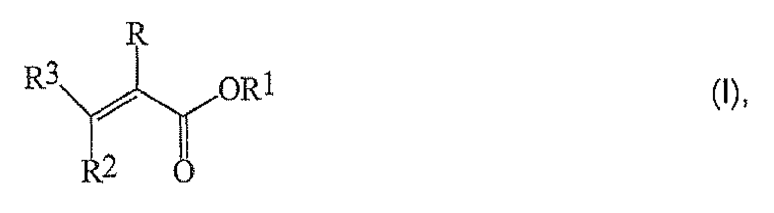 in which R is hydrogen or methyl, R¹ is a linear or branched alkyl radical having from 1 to 5 carbon atoms, R² and R³ are each independently hydrogen or a group of the formula -COOR' in which R' is hydrogen or an alkyl group having from 1 to 5 carbon atoms,
b) from 10 to 99.9% by weight, based on the weight of the monomer compositions for preparing the hydrophobic segments, of at least one ethylenically unsaturated ester compound of the formula (II) 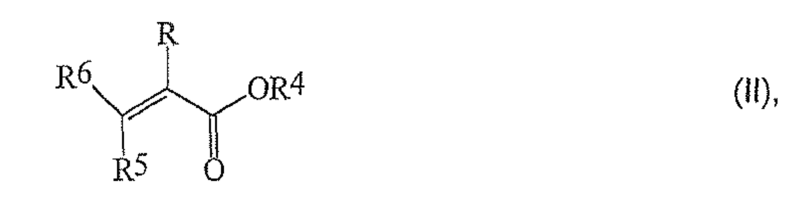 in which R is hydrogen or methyl, R⁴ is a linear or branched alkyl radical having from 6 to 15 carbon atoms, R⁵ and R⁶ are each independently hydrogen or a group of the formula -COOR'' in which R'' is hydrogen or an alkyl group having from 6 to 15 carbon atoms,
c) from 0 to 80% by weight, based on the weight of the monomer compositions for preparing the hydrophobic segments, of at least one ethylenically unsaturated ester compound of the formula (III) 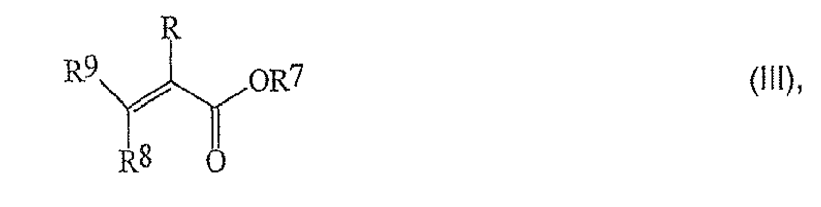 in which R is hydrogen or methyl, R⁷ is a linear or branched alkyl radical having from 16 to 30 carbon atoms, R⁸ and R⁹ are each independently hydrogen or a group of the formula -COOR''' in which R''' is hydrogen or an alkyl group having from 16 to 30 carbon atoms,
e) from 0 to 50% by weight, based on the weight of the monomer compositions for preparing the hydrophobic segments, of comonomer,
and the polar segment comprising units derived from ethylenically unsaturated, polar ester compounds of the formula (IV) 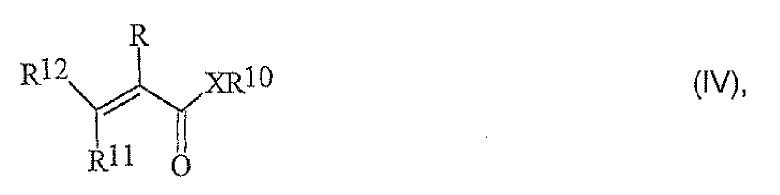 in which R is hydrogen or methyl, X is oxygen, sulfur or an amino group of the formula -NH- or -NR^{a}- in which R^{a} is an alkyl radical having from 1 to 40 carbon atoms, R¹⁰ is a radical which comprises from 2 to 1000 carbon atoms and has at least 2 heteroatoms, R¹¹ and R¹² are each independently hydrogen or a group of the formula -COX'R¹⁰' in which X' is oxygen or an amino group of the formula -NH- or -NR^{a'}- in which R^{a'} is an alkyl radical having from 1 to 40 carbon atoms, and R^{10'} is a radical comprising from 1 to 100 carbon atoms, **characterized in that** at least one polar segment comprises at least 3 units which are derived from monomers of the formula (IV) and are bonded directly to one another.

19. Lubricant oil composition comprising at least one copolymer according to Claim 18, **characterized in that** the hydrophobic segment P has a weight-average degree of polymerization in the range from 20 to 5000.

20. Lubricant oil composition comprising at least one copolymer according to Claim 18 or 19, **characterized in that** the polar segment D has a weight-average degree of polymerization in the range from 3 to 1000.

21. Lubricant oil composition comprising at least one copolymer according to at least one of Claims 18 to 20, **characterized in that** at least one polar segment comprises at least 50% by weight, based on the weight of the polar segment, of units derived from monomers of the formula (IV).

22. Lubricant oil composition comprising at least one copolymer according to at least one of Claims 18 to 21, **characterized in that** the weight ratio of the hydrophobic segments to the polar segments is in the range from 100:1 to 1:1.

23. Lubricant oil composition according to at least one of the preceding claims, **characterized in that** Lubricant oil composition comprises at least one mineral oil and/or a synthetic oil.

## Revendications

1. Composition d'huile lubrifiante comprenant au moins un copolymère pouvant être obtenu par polymérisation d'au moins une composition monomère qui consiste dans
a) de 0 à 40 % en poids d'au moins un composé ester éthyléniquement insaturé de la formule (I) 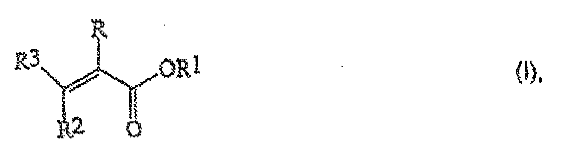 dans laquelle R représente de l'hydrogène ou du méthyle, R¹ est un radical alkyle linéaire ou ramifié avec de 1 à 5 atomes de carbone, R² et R³ représentent indépendamment de l'hydrogène ou un groupe de la formule -COOR' dans laquelle R' est de l'hydrogène ou un groupe alkyle avec de 1 à 5 atomes de carbone,
b) de 10 à 99,9 % en poids d'au moins un composé ester éthlyléniquement insaturé de la formule (II) 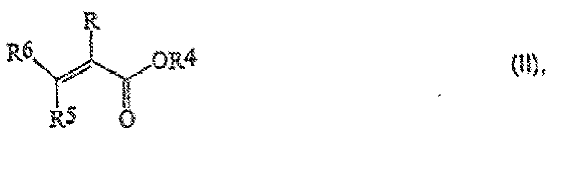 dans laquelle R représente de l'hydrogène ou du méthyle, R⁴ est un radical alkyle linéaire ou ramifié, avec de 6 à 15 atomes de carbone, R⁵ et R⁶ représentent indépendamment de l'hydrogène ou un groupe de la formule -COOR", dans laquelle R" est de l'hydrogène ou un groupe alkyle avec de 6 à 15 atomes de carbone,
c) de 0 à 80 % en poids d'au moins un composé ester éthyléniquement insaturé de la formule (III) 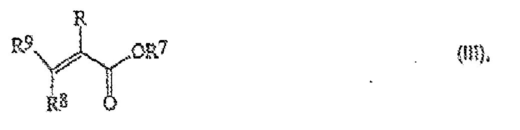 dans laquelle R représente de l'hydrogène ou du méthyle, R⁷ est un radical alkyle linéaire ou ramifié, avec de 16 à 30 atomes de carbone, R⁸ et R⁹ représentent indépendamment de l'hydrogène ou un groupe de la formule -COOR''', dans laquelle R''' est de l'hydrogène ou un groupe alkyle avec de 16 à 30 atomes de carbone,
d) de 0,1 à 30 % en poids d'au moins un composé ester polaire éthyléniquement insaturé de la formule (IV) 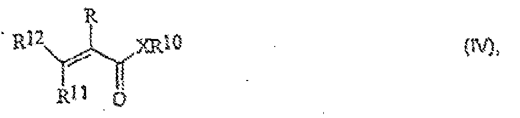 dans laquelle R représente de l'hydrogène ou du méthyle, X représente de l'oxygène, du soufre ou un groupe amino de la formule -NH- ou -NR^{a}-, dans laquelle R^{a} représente un radical alkyle avec de 1 à 40 atomes de carbone, R¹⁰ représente un radical comprenant de 2 à 1000 atomes de carbone avec au moins 2 hétéroatomes, R¹¹ et R¹² représentent indépendamment de l'hydrogène ou un groupe de la formule -COX'R¹⁰, dans laquelle X' représente de l'oxygène ou un groupe amino de la formule -NH- ou -NR^{a'}-, dans laquelle R^{a'} représente un radical alkyle avec de 1 à 40 atomes de carbone et R^{10'} représente un radical comprenant de 1 à 100 atomes de carbone,
e) de 0 à 50 % en poids de comonomère;
à chaque fois en rapport au poids total des monomères éthyléniquement insaturés,
le radical R¹⁰ comprenant dans au moins un des composés ester selon la formule (IV) au moins un groupe de la formule -CO-.

2. Composition d'huile lubrifiante comprenant au moins un copolymère selon la revendication 1, **caractérisée en ce que** le copolymère présente une viscosité spécifique η_{sp/c} mesurée à 25°C dans du chloroforme de l'ordre de 8 à 74 ml/g.

3. Composition d'huile lubrifiante comprenant au moins un copolymère selon la revendication 1 ou 2, **caractérisée en ce qu'**on modifie la composition monomère pendant la production des copolymères, de façon à obtenir des copolymères à blocs.

4. Composition d'huile lubrifiante comprenant au moins un copolymère selon au moins l'une quelconque des revendications précédentes, **caractérisée en ce que** le radical R¹⁰ dans le composé ester de la formule (IV) présente au moins 2 hétéroatomes différents.

5. Composition d'huile lubrifiante comprenant au moins un copolymère selon la revendication 4, **caractérisée en ce que** le radical R¹⁰ comprend dans au moins l'un des composés ester de la formule (IV) au moins un atome d'azote et au moins un atome d'oxygène.

6. Composition d'huile lubrifiante comprenant au moins un copolymère selon au moins l'une quelconque des revendications précédentes, **caractérisée en ce qu'**au moins un hétéroatome dans le radical R¹⁰ est séparé dans au moins l'un des composés ester de la formule (IV) par l'intermédiaire d'au moins 4 atomes du groupe X.

7. Composition d'huile lubrifiante comprenant au moins un copolymère selon au moins l'une quelconque des revendications précédentes, **caractérisée en ce que** le radical R¹⁰ comprend dans au moins l'un des composés ester selon la formule (IV) au moins 2 groupes de la formule -CO-.

8. Composition d'huile lubrifiante comprenant au moins un copolymère selon la revendication 7, **caractérisée en ce que** lesdits au moins deux groupes de la formule -CO- sont reliés entre eux par l'intermédiaire d'au plus 4 atomes en rapport à l'atome C du groupe CO.

9. Composition d'huile lubrifiante comprenant au moins un copolymère selon la revendication 8, **caractérisée en ce que** le radical R¹⁰ représente dans au moins un composé ester de la formule (IV) un groupe de la formule (IX)

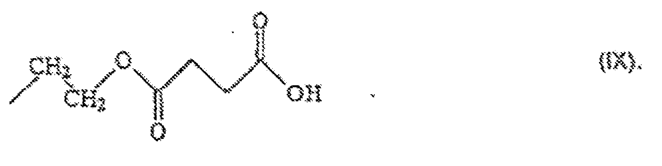

10. Composition d'huile lubrifiante comprenant au moins un copolymère selon la revendication 9, **caractérisée en ce que** le composant d) comprend au moins un composé ester selon la formule (X)

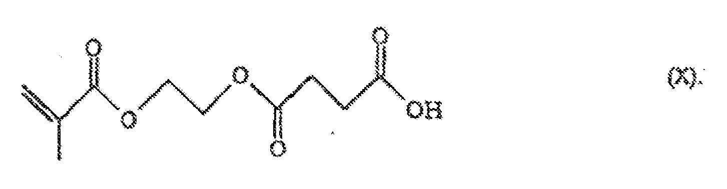

11. Composition d'huile lubrifiante comprenant au moins un copolymère selon la revendication 8, **caractérisée en ce que** le radical R¹⁰ représente dans au moins un composé ester de la formule (IV) un groupe de la formule (XI)

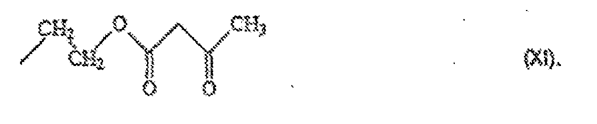

12. Composition d'huile lubrifiante comprenant au moins un copolymère selon la revendication 11, **caractérisée en ce que** le composant d) comprend au moins un composé ester selon la formule (XII)

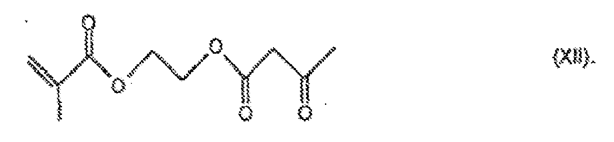

13. Composition d'huile lubrifiante comprenant au moins un copolymère selon l'une quelconque des revendications 1 à 8, **caractérisée en ce que** le radical R¹⁰ comprend dans au moins l'un des composés ester selon la formule (IV) au moins un groupe de la formule -CO- et au moins un atome d'azote.

14. Composition d'huile lubrifiante comprenant au moins un copolymère selon la revendication 13, **caractérisée en ce que** le radical R¹⁰ comprend dans au moins l'un des composés ester selon la formule (IV) au moins un groupe urée.

15. Composition d'huile lubrifiante comprenant au moins un copolymère selon la revendication 14, **caractérisée en ce que** le radical R¹⁰ représente dans au moins un composé ester de la formule (IV) un groupe de la formule (XIII) 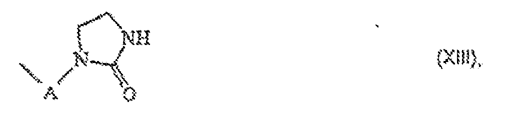 dans laquelle A est un groupe liant avec de 1 à 500 atomes de carbone.

16. Composition d'huile lubrifiante comprenant au moins un copolymère selon la revendication 15, **caractérisée en ce que** le composant d) comprend au moins un composé ester selon la formule (XIV)

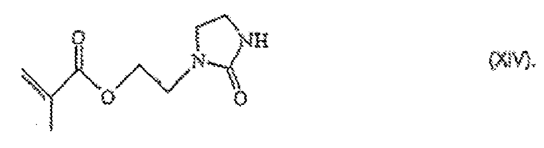

17. Composition d'huile lubrifiante comprenant au moins un copolymère selon au moins l'une quelconque des revendications précédentes, **caractérisée en ce que** le copolymère présente une polydispersité M_{w}/Mₙ de l'ordre de 1,05 à 4,0.

18. Composition d'huile lubrifiante comprenant au moins un copolymère selon au moins l'une quelconque des revendications précédentes, **caractérisée en ce que** le copolymère est un copolymère à blocs, le copolymère à blocs comprenant au moins un segment P hydrophobe et au moins un segment D polaire, le segment hydrophobe pouvant être obtenu par polymérisation de compositions monomères, qui comprend
a) de 0 à 40 ° % en poids, en rapport au poids des compositions monomères pour la production des segments hydrophobes, d'un ou de plusieurs composés ester éthyléniquement insaturés de la formule (I) 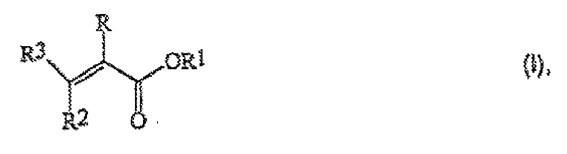 dans laquelle R représente de l'hydrogène ou du méthyle, R¹ est un radical alkyle linéaire ou ramifié avec de 1 à 5 atomes de carbone, R² et R³ représentent indépendamment de l'hydrogène ou un groupe de la formule -COOR' dans laquelle R' est de l'hydrogène ou un groupe alkyle avec de 1 à 5 atomes de carbone,
b) de 10 à 99,9 % en poids, en rapport au poids des compositions monomères pour la production des segments hydrophobes, d'un ou de plusieurs composés ester éthyléniquement insaturés de la formule (II) 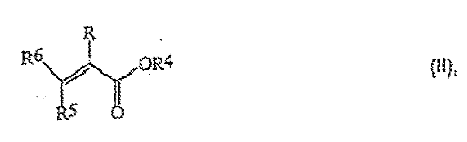 dans laquelle R représente de l'hydrogène ou du méthyle, R⁴ est un radical alkyle linéaire ou ramifié avec de 6 à 15 atomes de carbone, R⁵ et R⁶ représentent indépendamment de l'hydrogène ou un groupe de la formule -COOR", dans laquelle R" est de l'hydrogène ou un groupe alkyle avec de 6 à 15 atomes de carbone,
c) de 0 à 80 % en poids, en rapport au poids des compositions monomères pour la production des segments hydrophobes, d'un ou de plusieurs composés ester éthyléniquement insaturés de la formule (III) 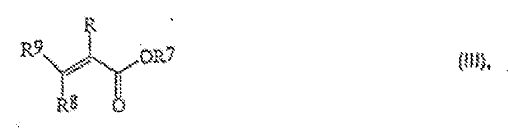 dans laquelle R représente de l'hydrogène ou du méthyle, R⁷ est un radical alkyle linéaire ou ramifié avec de 16 à 30 atomes de carbone, R⁸ et R⁹ représentent indépendamment de l'hydrogène ou un groupe de la formule -COOR''', dans laquelle R''' est de l'hydrogène ou un groupe alkyle avec de 16 à 30 atomes de carbone,
e) de 0 à 50 % en poids de comonomère, en rapport au poids des compositions monomères pour la production des segments hydrophobes
et le segment polaire comprenant des unités qui sont dérivées de composés ester polaires éthyléniquement insaturés de la formule (IV) 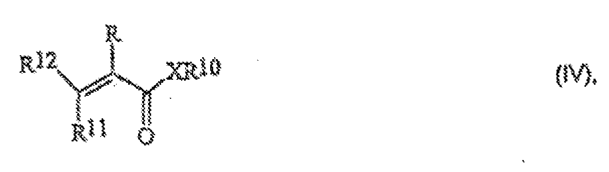 dans laquelle R représente de l'hydrogène ou du méthyle, X représente de l'oxygène, du soufre ou un groupe amino de la formule -NH- ou -NR^{a}-, dans laquelle R^{a} représente un radical alkyle avec de 1 à 40 atomes de carbone, R¹⁰ représente un radical comprenant de 2 à 1000 atomes de carbone avec au moins 2 hétéroatomes, R¹¹ et R¹² représentent indépendamment de l'hydrogène ou un groupe de la formule -COX'R^{10'}, dans laquelle X' représente de l'oxygène ou un groupe amino de la formule -NH- ou -NR^{a}'-, dans laquelle R^{a}' représente un radical alkyle avec de 1 à 40 atomes de carbone et R¹⁰' représente un radical comprenant de 1 à 100 atomes de carbone, **caractérisée en ce qu'**au moins un segment polaire comprend au moins 3 unités dérivées de monomères de la formule (IV) qui sont directement liées les unes aux autres.

19. Composition d'huile lubrifiante comprenant au moins un copolymère selon la revendication 18, **caractérisée en ce que** le segment hydrophobe P présente un taux de polymérisation dont la moyenne est calculée via le poids, de l'ordre de 20 à 5000.

20. Composition d'huile lubrifiante comprenant au moins un copolymère selon la revendication 18 ou 19, **caractérisée en ce que** le segment polaire D présente un taux de polymérisation dont la moyenne est calculée via le poids, de l'ordre de 3 à 1000.

21. Composition d'huile lubrifiante comprenant au moins un copolymère selon au moins l'une quelconque des revendications 18 à 20, **caractérisée en ce qu'**au moins un segment polaire comprend au moins 50 % en poids, en rapport au poids du segment polaire, d'unités qui sont dérivées de monomères selon la formule (IV).

22. Composition d'huile lubrifiante comprenant au moins un copolymère selon au moins l'une quelconque des revendications 18 à 21, **caractérisée en ce que** le rapport en poids des segments hydrophobes aux segments polaires se situe dans la plage de 100:1 à 1:1.

23. Composition d'huile lubrifiante selon au moins l'une quelconque des revendications précédentes, **caractérisée en ce que** la composition d'huile lubrifiante comprend au moins une huile minérale et/ou une huile synthétique.
